# EUROPÄISCHE PATENTSCHRIFT

(11) **EP 1 058 796 B1**
(45) Veröffentlichungstag und Bekanntmachung des Hinweises auf die Patenterteilung: **25.09.2002**
(21) Anmeldenummer: 99911752.6
(22) Anmeldetag: 08.03.1999
(51) Int. Cl.: F16H 47/08, F16H 3/66

(54) **HYDRODYNAMISCH-MECHANISCHES MEHRGANGVERBUNDGETRIEBE, INSBESONDERE 6-GANG-WANDLERAUTOMATGETRIEBE**
HYDRODYNAMIC-MECHANICAL MULTI-SPEED COMPOUND TRANSMISSION, ESPECIALLY A SIX-SPEED TORQUE-CONVERTER TRANSMISSION
BOITE DE VITESSES COMPOUND HYDRODYNAMICO-MECANIQUE A PLUSIEURS VITESSES, NOTAMMENT BOITE DE VITESSES AUTOMATIQUE A CONVERTISSEUR, A SIX VITESSES

(30) Priorität: 06.03.1998 DE 19809464; 06.03.1998 DE 29803793 U
(43) Veröffentlichungstag der Anmeldung: 13.12.2000
(73) Patentinhaber: Voith Turbo GmbH & Co. KG, 89522 Heidenheim (DE)
(72) Erfinder: KÖRNER, Tillmann, D-89551 Zang (DE); NITSCHE, Martin, D-89547 Gerstetten (DE); BECKE, Martin, D-89075 Ulm (DE)
(74) Vertreter: Dr. Weitzel & Partner
(86) Internationale Anmeldenummer: EP9901479
(87) Internationale Veröffentlichungsnummer: WO99045296

(56) Entgegenhaltungen:
- WO-A-96/41976
- DE-A- 3 604 393
- DE-A- 3 822 319
- US-A- 4 446 758
- US-A- 4 823 641
- US-A- 4 869 128

## Beschreibung

Die Erfindung betrifft ein hydrodynamisch-mechanisches Mehrgangverbundgetriebe mit wenigstens vier Gängen für den Einsatz in Fahrzeugen, insbesondere Bussen, im einzelnen mit den Merkmalen aus dem Oberbegriff des Anspruchs 1, ferner ein Verfahren zur Entwicklung einer Baureihe aus einem Grundgetriebe in Form eines hydrodynamisch-mechanischen Mehrgangverbundgetriebes mit wenigstens vier theoretisch möglichen Gangstufen für den Einsatz in Fahrzeugen für unterschiedliche Anforderungen.

Hydrodynamisch-mechanische Verbundgetriebe, umfassend einen hydrodynamischen Drehzahl-/Drehmomentenwandler und einen mechanischen Getriebeteil, sind in einer Vielzahl von Ausführungen bekannt. Die Druckschrift DE 36 04 393 C2 offenbart ein gattungsgemäßes hydrodynamisches Verbundgetriebe, umfassend einen Drehmomentenwandler und ein mit diesem in Serie geschaltetes Schaltgetriebe. Das Schaltgetriebe umfaßt dazu zwei Planetenradsätze, wobei die Planetenträger der beiden Planetenradsätze miteinander gekoppelt sind und den Ausgang des Schaltgetriebes bilden. Die Anzahl der erforderlichen Planetenradstege bzw. Planetenradsätze (u. U. Ravigneauxsätze) kann mit einer derartigen Anordnung gering gehalten und damit das Getriebe kurz gebaut werden und bei entsprechender Zuordnung von Schalteinrichtungen sind drei Gangstufen realisierbar. Der hydrodynamische Drehzahl-/Drehmomentenwandler umfaßt ein Pumpenrad, ein Turbinenrad sowie zwei Leiträder - ein erstes Leitrad und ein zweites Leitrad, wobei Mittel vorgesehen sind, welche eine Kopplung des Turbinenrades sowie des ersten Leitrades mit dem mechanischen Getriebeteil in Form des Schaltgetriebes ermöglichen. Im einzelnen ist die Gesamtgetriebeeingangswelle entweder über den hydrodynamischen Drehzahl-/Drehmomentenwandler und dabei über das Turbinenrad mit dem Sonnenrad des einen Planetenradsatzes des mechanischen Getriebeteiles oder aber direkt über eine sogenannte Überbrückungskupplung mit diesem koppelbar. Das erste Leitrad ist über einen Freilauf mit dem Sonnenrad des anderen zweiten Planetenradsatzes des mechanischen Getriebeteiles verbunden. Die charakteristischen Eigenschaften des Drehzahl/Drehmomentenwandlers in jedem Bereich des Übersetzungsverhältnisses und das Übersetzungsverhältnis des mechanischen Getriebeteils werden durch Umschalten des Übertragungsweges des von der ersten Leitradwelle ausgehenden Momentes geändert, und zwar durch die wahlweise Betätigung von Kupplungs- und/oder Bremseinrichtungen, die entweder ein Festsetzen der ersten Leitradwelle oder aber eine Kopplung der ersten Leitradwelle mit der Turbinenradwelle und damit des ersten Sonnenrades des ersten Planetenradsatzes ermöglichen. Der Vorteil des in dieser Druckschrift beschriebenen Dreiganggetriebes besteht eindeutig in seiner geringen Baugröße und dem geringen Gewicht. Allerdings ist eine entsprechende Auslegung dieses vorhandenen Getriebes hinsichtlich des Haupteinsatzfalles bzw. eine aufwendige Modifikation dessen erforderlich, um bestimmte Parameter, beispielsweise den Kraftstoffverbrauch eines Fahrzeuges zu optimieren oder höhere Endauslegungsgeschwindigkeiten des Fahrzeuges zu ermöglichen.

Der Erfindung liegt die Aufgabe zugrunde, ein hydrodynamisch-mechanisches Verbundgetriebe der eingangs genannten Art derart weiterzuentwickeln, daß dieses noch optimaler die bestehenden Einsatzerfordemisse zu erfüllen vermag, wobei die Vorteile des geringen Gewichtes und der geringen Baugröße weiter beibehalten werden sollen. Dabei ist je nach Einsatzfall, beispielsweise für den Einsatz in Bussen für den Stadtverkehr (Einsatzfall mit geringen Endauslegungsgeschwindigkeiten) oder hauptsächlich den Überlandverkehr (Einsatzfall mit hohen Endauslegungsgeschwindigkeiten), auf einen optimalen, d.h. möglichst hyperbelförmigen, Zugkraftverlauf, geringe Kraftstoffverbräuche und eine wahlweise nutzbare Ganganzahl (4-oder 5- oder 6-Ganggetriebe) je nach Endauslegungsgeschwindigkeit sowie für die letztgenannte Einsatzmöglichkeit auf einen einfach zu realisierenden Schnellgang abzustellen. Vorzugsweise soll das Getriebe universal einsetzbar sein, d.h. beispielsweise für Omnibusse mit geringem Gewicht und großem Gewicht (Bandbreite Gewicht: mₘᵢₙ-mₘₐₓ) sowie unterschiedlichen Endauslegungsgeschwindigkeiten (Bandbreite Endauslegungsgeschwindigkeit vₘᵢₙ-vₘₐₓ) ohne erhebliche zusätzliche bauteilmäßige Getriebemodifikation einsetzbar sein und unterschiedliche Anwendungsgebiete und damit unterschiedliche Betriebsweisen, insbesondere der Anfahrvarianten ermöglichen.

Die erfindungsgemäße Lösung der Aufgabe ist durch die Merkmale der Ansprüche 1 und 20 charakterisiert. Vorteilhafte Ausgestaltungen sind in den Unteransprüchen wiedergegeben.

Das hydrodynamisch-mechanische Mehrgangverbundgetriebe mit einem hydrodynamischen Getriebeteil und einem mechanischen Getriebeteil, wobei der hydrodynamische und der mechanische Getriebeteil in Leistungsflußrichtung betrachtet in Reihe geschalten sind und wenigstens Mittel zur Umgehung des hydrodynamischen Getriebeteiles bei der Leistungsübertragung vorgesehen sind, wird erfindungsgemäß hinsichtlich des mechanischen Getriebeteils derart hinsichtlich der Übersetzungen ausgelegt, daß jeweils wenigstens ein Gangstufensprung phi zwischen zwei einander benachbarten Gängen zwischen 1,1 und 1,45 erzielt wird. Der hydrodynamische Getriebeteil umfaßt dabei wenigstens einen hydrodynamischen Drehzahl-/Drehmomentenwandler. Der mechanische Getriebeteil umfaßt eine mechanische Drehzahl/Drehmomentenwandlungseinrichtung mit wenigstens zwei Planetenradsätzen. Vorzugsweise ist das hydrodynamisch-mechanische Mehrgangverbundgetriebe mit einem Nachschaltsatz ausgerüstet, so daß theoretisch 6-Gangstufen denkbar sind. In diesem Fall ist es besonders vorteilhaft, den mechanischen Getriebeteil derart auszulegen, daß die folgenden Gangstufensprünge phi erzielt werden:
- phi ≤ 1,45 zwischen der ersten und der zweiten Gangstufe und der zweiten und dritten Gangstufe;
- phi ≤ 1,35 zwischen zwei aufeinanderfolgenden Gangstufen der folgenden Gänge.
Phi kann dabei konstant oder in Richtung höherer Gänge fallend ausgelegt werden.

Die erfindungsgemäße Auslegung des Getriebes ermöglicht es, einen möglichst hyperbelförmigen Zugkraftverlauf im Zugkraft/Geschwindigkeitsdiagramm auch bei geringen Geschwindigkeiten zu erzielen. Des weiteren können durch entsprechende Ansteuerung der einzelnen Getriebeelemente aufgrund dieser grundsätzlichen Gangstufung unterschiedliche Betriebskonzepte mit optimalen Ergebnis bezüglich verschiedener Auslegungsgeschwindigkeiten realisiert werden. Dabei finden beispielsweise beim Einsatz der Getriebe in Bussen sowohl der untere Geschwindigkeitsbereich, welcher für Stadtbusse von besondere Bedeutung ist, und der obere Geschwindigkeitsbereich, welcher den Hauptnutzungsbereich in Reisebussen darstellt, Beachtung. Vorzugsweise werden daher die Gangstufensprünge in den oberen Gängen, d.h. von einem Ausgangsgang in den nächsthöheren Gang, konstant ausgeführt, was den üblichen Auslegungskriterien in den oberen Gängen, insbesondere bei Getrieben für den Einsatz im Reisebus entspricht. Bei geringeren Auslegungsgeschwindigkeiten (größere Achsübersetzungen) kann dadurch der erste Gang (Gang mit der größten Übersetzung) unangesteuert bleiben. Der Drehzahlsprung zwischen Wandlerdrehzahl und 2. Gang bleibt damit unter 1,8.

Vorzugsweise ist der mechanische Getriebeteil derart ausgelegt, daß die an der Drehzahl-/Drehmomentenwandlung beteiligten Getriebeelemente in der ersten Gangstufe eine Übersetzung im Bereich von 3 < i < 3,25 und in der letzten Gangstufe eine Übersetzung im Bereich von 0,7 < i < 0.9 realisieren.

Auf dieser Grundlage können mit einer Getriebegrundbaueinheit ohne zusätzliche Modifikation eine Vielzahl von Ansteuervarianten realisiert werden, welche die Grundlage für die Entwicklung einer Baureihe aus einem einzigen Grundgetriebe in Form eines hydrodynamisch-mechanischen Mehrgangverbundgetriebes mit wenigstens vier theoretisch möglichen Gangstufen für den Einsatz in Fahrzeugen für unterschiedliche Anforderungen bilden.

Im einzelnen können durch Variation hinsichtlich der Ansteuerung der Getriebeelemente
a) eine Mehrzahl von Getriebe- bzw. Gangvarianten (4/5/6-Gang),
b) eine Mehrzahl von Anfahrvarianten,
c) eine Vielzahl von Fahrvarianten durch Mischung der einzelnen Getriebe bzw. Gangvarianten mit den einzelnen Anfahrvarianten
bei baugleichem Grundgetriebe erzielt werden.

Die einzelnen Gangvarianten werden dabei durch Weglassen von Gangstufen realisiert. Das Grundgetriebekonzept ist derart ausgelegt, daß eine Vielzahl von Gangstufen, insbesondere maximal 6 Gangstufen, theoretisch realisiert werden können. Die erfindungsgemäßen Gangstufungen gelten dabei für die Auslegung des mechanischen Getriebeteiles für eine 6-Gang-Getriebevariante. Die einzelnen Getriebevarianten werden durch Weglassen von einzelnen Gängen realisiert. Dabei erfolgt jedoch aufgrund der Zuordnung der neuen Gänge zu den einzelnen mechanischen Gangstufen keine Veränderung der Gangstufensprünge zwischen den für das Ausgangsgrundgetriebe theoretisch möglichen Gangstufen. Dies bedeutet, daß aus der für das Grundgetriebe möglichen Abfolge einzelner Gang- bzw. Schaltstufen, die theoretisch eingelegt werden können, und die durch die Betätigung und das Lösen der einzelnen Schalteinrichtungen für die einzelnen Gänge charakterisiert sind, Gangstufen so weggelassen werden, daß beispielsweise bei Weglassen des in der möglichen Abfolge der Schaltstufen für das Grundgetriebe ersten Ganges der nunmehr eingelegte erste Gang dem zweiten in der für das Grundgetriebe theoretisch festgelegten Abfolge der Schaltstufen entspricht. Beim Weglassen von Gangstufen entfällt dabei in der Regel lediglich die entsprechende Betätigung für diese Gangstufe.

Der systematische Verzicht auf immer die größte Gangstufe erfolgt dabei derart, daß keine Zwischengangstufen aus dem häufig genutzten Fahrbereich entfernt werden, sondern lediglich, je nach Einsatzerfordernis, entweder der erste, der letzte oder jeweils ein, dieser folgender bzw, vorangehender Gang. Dabei wird bewußt vermieden, den Verzicht auf Gangstufen durch Eliminierung des Nachschaltsatzes zu verwirklichen. Es sind bei einem Mehrgangverbundgetriebe mit sechs Gängen Getriebevarianten mit sechs, eine Getriebevariante mit fünf und eine Getriebevariante mit vier Gängen realisierbar. Dabei können die einzelnen Getriebe- bzw. Gangvarianten entweder grundsätzlich von vornherein als feste Getriebe- bzw. Gangvariante angeboten werden oder aber beim Einsatz in Fahrzeugen frei auswählbar und austauschbar sein. Im erstgenannten Fall kann somit die Auswahl bereits bei Bestellung des Getriebes durch einen Kunden erfolgen, wobei diese Auswahl dann fest für die weiteren Einsatzzwecke vorgegeben ist. im zweiten Fall erlaubt der Wechsel der Gangvariante eine Umstellung des Anwendungsbereiches. Besonders beim Einsatz in Bussen oder in Baufahrzeugen, bei welchen unterschiedliche Anwendungsgebiete - bei Bussen der Stadteinsatz, der Überlandeinsatz sowie der Einsatz als Reisebus und bei Baufahrzeugen der Gruppenbetrieb sowie der Straßenbetrieb - gefordert werden, bietet die Möglichkeit der freien Wählbarkeit erhebliche Vorteile hinsichtlich des Fahrverhaltens im jeweiligen Hauptanwendungsbereich. So ist es beispielsweise denkbar, bei einem entsprechend ausgelegten Mehrgangverbundbetriebe mit sechs Gängen im Stadtverkehr den ersten und sechsten Gang wegzulassen, was ein Anfahren im zweiten Gang bedeutet, wobei keinerlei phi-Verschiebung durch das Weglassen der einzelnen Gänge erfolgt. Im einzelnen bedeutet dies, daß im zweiten Gang, in welchem jetzt angefahren wird, der mechanische Getriebeteil derart ausgelegt ist, daß dieser einen Gangstufensprung vom jetzt ersten Gang in der Größe erfährt, wie er bei dem theoretisch ausgelegten 6-Gang-Grundgetriebe zwischen dem zweiten und dritten Gang erfolgt. Bei Überlandbussen wäre zu überlegen, ob von dem theoretisch für sechs Gänge ausgelegten Getriebe der erste Gang weggelassen wird, wodurch im zweiten Gang angefahren wird und vor allem der höhere Geschwindigkeitsbereich, welcher für Überlandbusse ein hauptsächliches Anwendungsgebiet darstellt, genutzt wird.

Auf der Grundlage der Getriebeauslegung mit den erfindungsgemäßen Gangstufen können durch unterschiedliche Ansteuervarianten der einzelnen Getriebeelemente, insbesondere der einzelnen Getriebeelemente für die einzelnen Gangstufen und der Wahl der Leistungsübertragung über den hydrodynamischen Getriebeteil oder unter Umgehung des hydrodynamischen Getriebeteiles auf einfache Art und Weise unterschiedliche Anfahrkonzepte mit unterschiedlichem Zielen, beispielsweise hohe zur Verfügung stehende Leistung oder geringer Kraftstoffverbrauch, verwirklicht werden. Des weiteren ist es möglich, einen weiten Einsatzbereich mit nur einem Getriebe abzudecken.

Die Integration eines Nachschaltsatzes, welcher Bestandteil des mechanischen Getriebeteiles ist, in der Grundgetriebebaueinheit aus mechanischem Getriebeteil und hydrodynamischen Getriebeteil, ermöglicht eine Mehrgängigkeit, welche wiederum dazu führt, daß der zu überstreichende Betriebsbereich mit einer Mehrzahl von Gängen realisiert werden kann, und vorzugsweise wenigstens ein Schnellgang bzw. ein sogenannter Overdrivegang vorgesehen wird, wobei mittels der höheren Getriebespreizung phi-gesamt eine optimale Anpassung an den Betrieb im optimalen Kraftstoffverbrauchsbereich der Antriebsmaschine realisiert werden kann.

Auf der Grundlage der Grundgetriebebaueinheit aus mechanischem Getriebeteil und hydrodynamischem Getriebeteil mit einem Nachschaltsatz und von theoretisch mehr als vier Gängen können eine Vielzahl von Anfahrvarianten realisiert werden, die ein bezüglich
a) des Verbrauches sparsames Fahrverhalten oder
b) ein besonders komfortables oder beispielsweise ein besonders leistungsorientiertes Fahrverhalten oder
c) eine Mischform von all diesen ermöglichen.

Auch die Anfahrvarianten können als wählbare Varianten in einer Getriebesteuerung abgespeichert werden, wobei entsprechend der Auswahl des gewünschten Anfahrverhaltens eine Ansteuerung der einzelnen Getriebeelemente erfolgt.

Vorzugsweise wird ein mechanischer Drehzahl-/Drehmomentenwandler eingesetzt, welcher wenigstens zwei Planetenradsätze umfaßt, wobei zwischen jeweils einem ersten Element des ersten Planetenradsatzes und einem zweiten Element des zweiten Planetenradsatzes eine drehfeste Verbindung besteht, die gleichzeitig den Eingang für den Nachschaltsatz bildet. Vorzugsweise sind jeweils deren Planetenträger miteinander gekoppelt und bilden den Abtrieb des mechanischen Drehzahl-/Drehmomentenwandlers, was eine Bauraumersparnis bedingt.

Der hydrodynamische Drehzahl-/Drehmomentenwandler umfaßt vorzugsweise zwei Leitradeinrichtungen. Ein erstes Leitrad ist dabei mit dem ersten Planetenradsatz des mechanischen Drehzahl-/Drehmomentenwandlers gekoppelt. Ein zweites Leitrad des hydrodynamischen Drehzahl/Drehmomentenwandlers ist über einen Freilauf mit dem Getriebegehäuse gekoppelt. Die abstützenden Drehmomente können zur Erhöhung der Zugkraft genutzt werden.

Ein Beispiel einer vorteilhaften Getriebeausführung mit den erfindungsgemäßen Parametern ist im einzelnen wie folgt aufgebaut: Das hydrodynamische Getriebeelement umfaßt wenigstens ein Pumpenrad, ein Turbinenrad sowie eine Leitradeinrichtung, umfassend ein erstes Leitrad und ein zweites Leitrad. Das zweite Leitrad ist dabei über einen Freilauf mit dem Getriebegehäuse verbunden. Das erste Leitrad steht über eine sogenannte Leitradwelle mit dem mechanischen Drehzahl/Drehmomentenwandler in Triebverbindung. Der mechanische Drehzahl/Drehmomentenwandler umfaßt wenigstens zwei Planetenradsätze, einen ersten Planetenradsatz und einen zweiten Planetenradsatz, wobei jeder Planetenradsatz jeweils ein Sonnenrad, ein Hohlrad, Planetenräder und einen Planetenträger aufweist. Die beiden Planetenradsätze - erster Planetenradsatz und zweiter Planetenradsatz - sind hinsichtlich eines Getriebeelementes miteinander drehfest gekoppelt. Vorzugsweise wird das erste Getriebeelement des ersten Planetenradsatzes, welches mit einem ersten Getriebeelement des zweiten Planetenradsatzes drehfest verbunden ist, jeweils vom Planetenträger des zugehörigen Planetenradsatzes gebildet. Die beiden Sonnenräder der einzelnen Planetenradsätze, des ersten Planetenradsatzes und des zweiten Planetenradsatzes, bilden die Eingänge des mechanischen Drehzahl/Drehmomentenwandlers. Der erste Eingang, welcher mit dem Sonnenrad des ersten Planetenradsatzes gekoppelt ist, ist über einen Freilauf mit dem ersten Leitrad des hydrodynamischen Drehzahl-/Drehmomentenwandlers verbunden. Das Sonnenrad des zweiten Planetenradsatzes ist vorzugsweise mit der Turbinenradwelle, welche entweder über den hydrodynamischen Drehzahl/Drehmomentenwandler oder die Überbrückungskupplung mit der Getriebeeingangswelle koppelbar ist. Der hydrodynamische Drehzahl/Drehmomentenwandler ist derart im Getriebe angeordnet, daß dessen Turbinenschaufelrad am Getriebegehäuse feststellbar ist, während das Rotorschaufelrad vorzugsweise mit dem Abtrieb des mechanischen Drehzahl/Drehmomentenwandlers gekoppelt ist. Dieser Abtrieb wird von den miteinander gekoppelten Getriebeelementen der beiden Planetenradsätze gebildet, vorzugsweise im vorliegenden Fall der Kopplung der Planetenträger. Der Abtrieb des mechanischen Drehzahl-/Drehmomentenwandlers bildet den Eingang der mechanischen Nachschaltstufe und ist somit über die entsprechende Gangstufung mit der Getriebeausgangswelle gekoppelt. Der hydrodynamische Retarder wird somit über die Nachschaltstufe an der Getriebeausgangswelle wirksam und übt somit die Funktion eines Sekundärretarders aus. Durch die Nachschaltstufe erfährt das Rotorschaufelrad des hydrodynamischen Retarders des weiteren eine Übersetzung. Über den gesamten Betriebsbereich ist der hydrodynamische Retarder, bezogen auf die Drehzahl der Abtriebswelle, jeweils mit zwei unterschiedlichen Übersetzungen betreibbar. Um gangunabhängig gleiche Bremsmomente zu erzielen, muß die Füllung des Retarders bei Übersetzung der Nachschaltgruppe ins Schnelle größer sein, als bei der "Direktübersetzung" von 1,0. Je nach Rückschaltstrategie muß die Füllung angepaßt werden, wenn alle Gänge nacheinander zurückgeschaltet werden. Die Füllung muß nicht angepaßt werden, wenn nur zu jedem übernächsten Gang zurückgeschaltet wird. Die auf diese Art und Weise erfolgende Kopplung des hydrodynamischen Retarders mit der Abtriebswelle ermöglicht es, immer optimale Bremsvorgänge zu realisieren und ein optimales Bremsverhalten zu erzielen,

Zur Realisierung der einzelnen Gangstufen sind Schalteinrichtung in Form von Bremseinrichtungen und Kupplungseinrichtungen vorgesehen wobei diese vorzugsweise in Lamellenbauart ausgeführt sind. Die einzelnen Schalteinrichtungen sind entsprechend dem gewünschten einzulegenden Gang und der dabei erhältlichen Übersetzung zu betätigen. Dazu ist vorzugsweise eine Getriebesteuerung vorgesehen. Eine erste Bremseinrichtung dient dabei der Feststellung der Leitradwelle und damit des Sonnenrades des ersten Planetenradsatzes. Eine zweite Bremseinrichtung dient der Feststellung des Hohlrades des ersten Planetenradsatzes und eine dritte Bremseinrichtung der Feststellung des Hohlrades des zweiten Planetenradsatzes des mechanischen Drehzahl-/Drehmomentenwandlers. Eine weitere vierte Bremseinrichtung dient der Feststellung des Sonnenrades der Nachschaltstufe. Ein erstes Kupplungselement dient der Realisierung der drehfesten Verbindung des Sonnenrades des ersten Planetenradsatzes und des Sonnenrades des zweiten Planetenradsatzes. Die Ansteuerung der einzelnen Schalteinrichtungen ermöglicht unterschiedliche Gangstufen und in Kombination mit der Wahl der Leistungsübertragung über den hydrodynamischen Getriebeteil oder unter Umgehung des hydrodynamischen Getriebeteiles unterschiedliche Betriebsweisen, insbesondere Anfahrprogramme. Bei der bevorzugten Ausführungsform sind das zweite Element des ersten Planetenradsatzes mittels einer ersten Bremseinrichtung, ein drittes Element des ersten Planetenradsatzes mittels einer zweiten Bremseinrichtung und ein drittes Getriebeelement des zweiten Planetenradsatzes mittels einer dritten Bremseinrichtung feststellbar. Die als Bremseinrichtungen und/oder Kupplungseinrichtungen ausgeführten Schaltelemente sind vorzugsweise in Lamellenbauart ausgeführt.

Der Nachschaltsatz umfaßt wenigstens einen Planetenradsatz, umfassend ein Sonnenrad, ein Hohlrad, Planetenräder und einen Planetenträger. Der Eingang des Planetenradsatzes wird dabei vom Planetenträger des Planetenradsatzes und der Abtrieb vom Hohlrad des Planetenradsatzes gebildet. Dem Planetenradsatz ist eine weitere vierte Bremseinrichtung und eine weitere zweite Kupplungseinrichtung zugeordnet. Die vierte Bremseinrichtung ist mit dem Sonnenrad des Planetenradsatzes koppelbar.

Die zweite Kupplungseinrichtung dient der Kopplung des Sonnenrades mit dem Planetenträger des Planetenradsatzes

Die Nachschaltstufe dient im vorliegenden Fall der Aufsplittung der mit dem Grundgetriebe realisierbaren drei Schaltstufen in jeweils zwei Teilstufen. Dies bedeutet, daß die einzelnen aufeinander folgenden Gänge mit Betätigung der gleichen Schaltelemente im Grundgetriebe, d.h. mechanischem Drehzahl/Drehmomentenwandler, durch wechselweise Betätigung der entsprechenden Schalteinrichtungen, Kupplungs- und/oder Bremseinrichtungen an der Nachschaltstufe realisiert werden. Jeweils zwei aufeinander folgende Gänge vom ersten Gang ausgehend betrachtet zeichnen sich somit im wesentlichen durch Betätigung derselben Schalteinrichtungen im Grundgetriebe aus. Dabei kann die Leistungsübertragung über den hydrodynamischen Getriebeteil oder unter Umgehung dessen, je nach Wahl, erfolgen. In der Regel wird in den Gängen 3, 4, 5 und 6 der mechanische Durchtrieb unter Umgehung des hydrodynamischen Drehzahl-/Drehmomentenwandlers geschaltet. In den Gängen 1 und 2 erfolgt die Leistungsübertragung mit über den Wandler. Erfindungsgemäß erfolgt die Auslegung des mechanischen Getriebeteiles derart, daß mit diesem ohne Berücksichtigung des hydrodynamischen Drehzahl-/Drehmomentenwandlers Gangstufensprünge in den einzelnen 6-Gängen von

| | |
|---|---|
| phi ≤ 1,45 | zwischen dem ersten und dem zweiten Gang und dem zweiten und dem dritten Gang und |
| phi ≤ 1,35 | zwischen zwei aufeinanderfolgenden Gangstufen der folgenden Gänge |

realisiert werden.

In der Nachschaltstufe der bevorzugten Ausführung werden bei aufeinanderfolgenden Gängen wechselweise die vierte Bremseinrichtung und zweite Kupplungseinrichtung betätigt Im Einzelnen sind in den einzelnen Gängen die folgenden Schalteinrichtungen betätigt, während die übrigen Schalteinrichtungen gelöst sind:

| | |
|---|---|
| 1. Gang | zweite Kupplungseinrichtung und dritte Bremseinrichtung |
| 2. Gang | dritte und vierte Bremseinrichtung |
| 3. Gang | zweite Kupplungseinrichtung und erste Bremseinrichtung |
| 4. Gang | erste und dritte Bremseinrichtung |
| 5. Gang | erste und zweite Kupplungseinrichtung |
| 6. Gang | erste Kupplungseinrichtung und vierte Bremseinrichtung |

Im Einzelnen ergeben sich für die bevorzugte Ausführung des hydrodynamisch-mechanischen Verbundgetriebes die folgenden Anfahrvarianten, welche sich im wesentlichen durch die Anzahl der Schaltvorgänge und ihrem Einfluß auf den Betriebsbereich der Antriebsmaschine unterscheiden. Die unterschiedlichen Anfahrvarianten ergeben sich aus der Realisierung der Leistungsübertragung über den Drehzahl-/Drehmomentenwandler oder unter Umgehung des Drehzahl/Drehmomentenwandlers in den einzelnen Gangstufen. Die einzelne Gangstufe ist dabei durch Betätigung der Schalteinrichtungen am mechanischen Drehzahl-/Drehmomentenwandler ohne Berücksichtigung des Nachschaltsatzes bestimmt. Die Schaltelemente des Nachschaltsatzes sind zur Realisierung der Anfahrvarianten derart betätigt, daß die jeweils größere Übersetzung eingestellt ist.

Nachfolgend werden lediglich mogliche Anfahrvarianten beschrieben ohne Berücksichtigung der Schaltung aller weiteren Gänge. Die nachfolgenden Gänge können genauso geschalten werden.
1.) Variante 1: vier Schaltvorgänge
   1.1 Leistungsübertragung über den hydrodynamischen Drehzahl/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist)
   1.2 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im ersten Gang durch Inbetriebnahme der Wandlerüberbrückungskupplung bzw. der Durchkupplung
   1.3 Leistungsübertragung über den hydrodynamischen Drehzahl/Drehmomentenwandler im zweiten Gang, d.h. Betätigen der Schaltelemente um mechanischen Drehzahl/Drehmomentenwandler wie im zweiten Gang und Lösung der Durchkupplung
   1.4 Leistungsübertragung von der Getriebeingangswelle unter Umgehung des hydrodynamischen Drehzahl/Drehmomentenwandlers bei Betätigung der Schaltelemente im zweiten Gang und beispielsweise Betätigung der Wandlerüberbrückungskupplung
   1.5 Leistungsübertragung von der Getriebeingangswelle unter Umgehung des hydrodynamischen Drehzahl/Drehmomentenwandlers bei Betätigung der Schaltelemente im dritten Gang
2) Variante 2: drei Schaltvorgänge
   2.1 Leistungsübertragung über den hydrodynamischen Drehzahl/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist)
   2.2 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im ersten Gang und der Lock-up-Kupplung
   2.3 Leistungsübertragung von der Getriebeingangswelle unter Umgehung des hydrodynamischen Drehzahl/Drehmomentenwandlers bei Betätigung der Schaltelemente im zweiten Gang
   2.4 Leistungsübertragung von der Getriebeingangswelle unter Umgehung des hydrodynamischen Drehzahl/Drehmomentenwandlers bei Betätigung der Schaltelemente im dritten Gang
   Alle weiteren höheren Gänge können genauso geschalten werden.
3.) Variante 3: drei Schaltvorgänge
   3.1 Leistungsübertragung über den hydrodynamischen Drehzahl/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist)
   3.2 Leistungsübertragung über den hydrodynamischen Drehzahl/Drehmomentenwandler im zweiten Gang auf den mechanischen Drehzahl-/Drehmomentenwandler (d.h. Betätigung der Schaltelemente wie im zweiten Gang, wobei dazu die Schaltelemente des Nachschaltsatzes derart betätigt sind, daß nur die jeweils kleinere Übersetzung eingestellt ist)
   3.3 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im zweiten Gang (Nachschaltsatz kleine Übersetzung)
   3.4 Leistungsübertragung von der Getriebeingangswelle unter Umgehung des hydrodynamischen Drehzahl/Drehmomentenwandlers bei Betätigung der Schaltelemente im dritten Gang
4.) Variante 4: zwei Schaltvorgänge
   4.1 Leistungsübertragung über den hydrodynamischen Drehzahl/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist)
   4.2 Leistungsübertragung über den hydrodynamischen Drehzahl/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils kleinere Übersetzung eingestellt ist)
   4.3 Leistungsübertragung von der Getriebeingangswelle unter Umgehung des hydrodynamischen Drehzahl/Drehmomentenwandlers bei Betätigung der Schaltelemente im dritten Gang
5.) Variante 5: zwei Schaltvorgänge
   5.1 Leistungsübertragung über den hydrodynamischen Drehzahl/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist)
   5.2 Leistungsübertragung von der Getriebeingangswelle unter Umgehung des hydrodynamischen Drehzahl/Drehmomentenwandlers bei Betätigung der Schaltelemente im zweiten Gang
   5.3 Leistungsübertragung von der Getriebeingangswelle unter Umgehung des hydrodynamischen Drehzahl/Drehmomentenwandlers bei Betätigung der Schaltelemente im dritten Gang
6.) Variante 6: drei Schaltvorgänge
   6.1 Leistungsübertragung über den hydrodynamischen Drehzahl/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils kleinere Übersetzung eingestellt ist)
   6.2 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im ersten Gang
   6.3 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im zweiten Gang
   6.4 Leistungsübertragung von der Getriebeingangswelle unter Umgehung des hydrodynamischen Drehzahl/Drehmomentenwandlers bei Betätigung der Schaltelemente im dritten Gang
7.) Variante 7: zwei Schaltvorgänge
   7.1 Leistungsübertragung über den hydrodynamischen Drehzahl/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils kleinere Übersetzung eingestellt ist)
   7.2 Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im zweiten Gang
   7.3 Leistungsübertragung von der Getriebeingangswelle unter Umgehung des hydrodynamischen Drehzahl/Drehmomentenwandlers bei Betätigung der Schaltelemente im dritten Gang
8.) Variante 8: ein Schaltvorgang
   8.1 Leistungsübertragung über den hydrodynamischen Drehzahl/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils kleinere Übersetzung eingestellt ist)
   8.2 Leistungsübertragung von der Getriebeeingangswelle unter Umgehung des hydrodynamischen Drehzahl/Drehmomentenwandlers bei Betätigung der Schaltelemente im dritten Gang

Die Varianten 1, 2, 5 und 6 stellen dabei Sparprogramme dar, während die Varianten 3, 4, 7 und 8 eine komfortable Betriebsweise ermöglichen. Je nach gewünschtem Effekt sind die Anfahrvarianten auszuwählen. Die vorrichtungsmäßige Umsetzung erfolgt in der Regel über eine Getriebesteuer- bzw. Regelvorrichtung, welche in der zentralen Fahrsteuerung des Fahrzeuges integriert sein kann oder zumindest mit dieser gekoppelt ist und somit ein optimales Motor-Getriebemanagement entsprechend den Einsatzerfordernissen unter unterschiedlichsten Randbedingungen realisiert werden kann.

Auf der Grundlage dieser sechsgängigen Auslegung kann entsprechend dem Einsatzerfordernis auch die Möglichkeit der Auswahl von verschiedenen Getriebevarianten bereitgestellt werden. Diese können, wie bereits im Vorfeld erwähnt, bei Bestellung fest vordefiniert oder aber frei wählbar zur Verfügung gestellt werden. Im vorliegenden Fall besteht die Möglichkeit, das Mehrgangverbundgetriebe mit den theoretisch sechs möglichen Gangstufen in ein Mehrgangverbundgetriebe mit vier bzw. fünf Gangstufen umzuwandeln, ohne daß am Aufbau des Getriebe etwas verändert werden muß. Die Getriebebaueinheit kann entsprechend der beschriebenen vorteilhaften Ausführung realisiert werden, wobei die einzelnen Getriebevarianten lediglich durch Ansteuerung der einzelnen Getriebeelemente bzw. eine Änderung des Ablaufes und der Reihenfolge der Ansteuerung der Getriebeelemente realisiert wird, insbesondere werden einzelne Gangstufungen eliminiert. Die Eliminierung erfolgt jedoch nicht in den Hauptanwendungsbereichen, d.h. es werden keine mittleren Gangstufen bzw. Gänge herausgenommen, sondern vorzugsweise wird jeweils auf die kleinsten bzw. größten Gangstufen verzichtet. Dabei werden entsprechend dem Schaltablaufplan lediglich die Betätigungen in diesen zu eliminierenden Gangstufen nicht mehr vorgenommen, so daß diese hinsichtlich der Betätigung der einzelnen Schalteinrichtungen den theoretisch sechs möglichen Gängen zugeordnet bleiben und somit sich die Gangstufungen nicht nach den verschobenen Gangstufen richten, sondern nach den ursprünglich sechs theoretischen bzw. den ausgewählten Gangstufen. Wird beispielsweise für den Einsatz des Getriebes im Stadtbus der theoretisch mögliche erste und sechste Gang eliminiert, fährt der Bus im theoretisch zweiten Gang an, wobei die Gangstufung zwischen dem Anfahrvorgang und dem nächst folgenden Vorgang der Gangstufung des theoretischen Ganges, d.h. des Übergangs vom zweiten in den dritten Gang, entspricht.

Vorzugsweise werden unter dem Aspekt der Universalität die Wahlmöglichkeit bezüglich der Getriebevarianten (4-, 5-, 6-Ganggetriebe) in Kombination mit der Auswahlmöglichkeit der Anfahrvarianten (sparsame Fahrweise, komfortable Fahrweise, leistungsorientierte Fahrweise) angeboten. Vorrichtungsmäßig kann dazu der Getriebebaueinheit eine Steuervorrichtung zugeordnet werden, welche entweder Bestandteil der Getriebebaueinheit ist, dieser also unmittelbar zugeordnet wird, oder in einer zentralen Fahrsteuerung integrierbar ist. Eine weitere denkbare Möglichkeit besteht darin, diese einzelnen Möglichkeiten in der dem Getriebe zugeordneten Steuervorrichtung abzulegen, wobei hinsichtlich der Modifikation bezüglich der Zusammenarbeit mit unterschiedlichen Antriebsmaschinen die einzelnen Anfahrvarianten und Getriebevarianten mittels entsprechender Kennfelder für die einzelnen möglichen Antriebsmaschinen und Einsatzerfordernisse abgelegt sein können und beim Einbau in ein Fahrzeug die Fahrsteuerung dieser Angaben dem Getriebe direkt entnimmt.

Vorzugsweise wird jedoch immer eine Wahlmöglichkeit für die Betätigung der einzelnen Schalteinrichtungen hinsichtlich der Reihenfolge und des Ablaufes vorgesehen werden, um somit das Einsatzspektrum des Fahrzeuges, in welches dieses Getriebe eingebaut wird, zu erweitern. Die konkrete konstruktive und bauteilmäßige Umsetzung liegt bei Kenntnis dieses erfindungsgemäßen Grundgedankens im Tätigkeitsbereich des zuständigen Fachmannes.

Die erfindungsgemäße Ausführung ist nachfolgend anhand von Figuren erläutert.
- Figur 1: verdeutlicht in schematisch vereinfachter Darstellung den Grundaufbau einer bevorzugten Ausführung eines hydrodynamisch-mechanischen Verbundgetriebes mit erfindungsgemäßer Gangstufen;
- Figur 2: zeigt das Schaltschema für theoretisch sechs mögliche Gänge für ein Getriebe nach Figur 1;
- Figuren 3a bis 3h: verdeutlichen Zugkraftdiagramme für unterschiedliche Anfahrvarianten mit einem erfindungsgemäß ausgelegten Getriebe entsprechend Figur 1.
- Figur 4a und 4b: verdeutlichen Zugkraftdiagramme eines konventionellen Mehrgang-Verbundgetriebes für den Einsatz in Überlandfahrzeugen (4a) und Stadtfahrzeugen (4b);
- Figur 5a und 5b: verdeutlichen Zugkraftdiagramme eines erfindungsgemäß gestalteten und ausgelegten Mehrgang-Verbundgetriebes bei Auslegung für den Einsatz in Überlandfahrzeugen (5a) und Stadtfahrzeugen (5b);

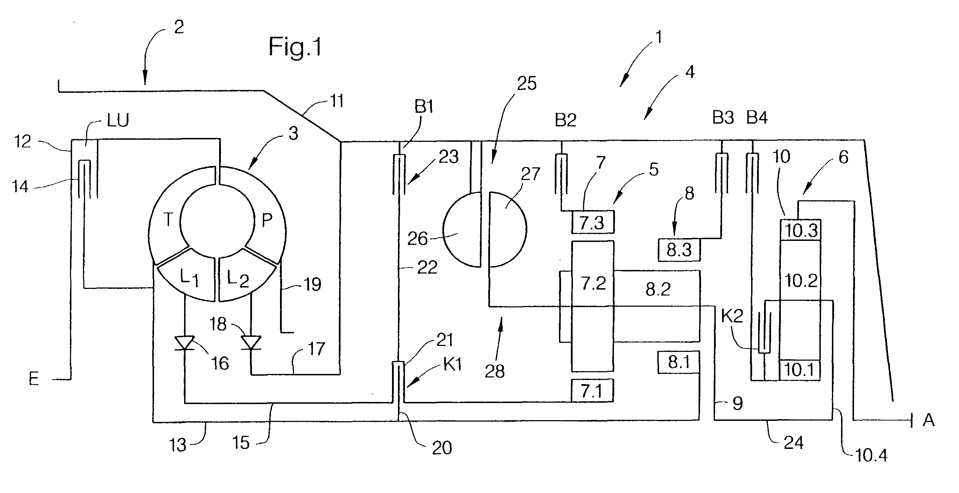

Die Figur 1 verdeutlicht beispielhaft eine vorteilhafte Ausführung eines erfindungsgemäß gestalteten hydrodynamisch-mechanischen Verbundgetriebes 1. Das hydrodynamisch-mechanische Verbundgetriebe 1 umfaßt einen ersten hydrodynamischen Getriebeteil 2 in Form eines hydrodynamischen Drehzahl-/Drehmomentenwandlers 3 und einen zweiten mechanischen Getriebeteil 4. Der mechanische Getriebeteil 4 umfaßt einen mechanischen Drehzahl-/Drehmomentenwandler 5 und einen, diesem in Kraftflußrichtung im Traktionsbetrieb nachgeschalteten Gruppensatz. Der mechanische Drehzahl-/Drehmomentenwandler 5 ist als Ravigneaux-Planetenradsatz ausgeführt. Dieser umfaßt einen ersten Planetenradsatz 7 und einen zweiten Planetenradsatz 8, welche einen gemeinsam genutzten Planetenradträger 9 aufweisen. Der erste Planetenradsatz 7 umfaßt ein Sonnenrad 7.1, Planetenräder 7.2 und ein Hohlrad 7.3. Der zweite Planetenradsatz 8 umfaßt ein Sonnenrad 8.1, Planetenräder 8.2 und ein Hohlrad 8.3. Die Planetenräder 8.2 sind an beiden Planetenradsätzen beteiligt.

Der Gruppensatz 6 umfaßt wenigstens einen Planetenradsatz 10, welcher ein Sonnenrad 10.1, Planetenräder 10.2, ein Hohlrad 10.3 und einen Steg 10.4 aufweist.

Der hydrodynamisch-mechanische Drehzahl-/Drehmomentenwandler 3 umfaßt ein Turbinenrad T, ein Pumpenrad P, ein erstes Leitrad L1 und ein zweites Leitrad L2 und ist durch ein Gehäuse 11 abgedeckt. Das Pumpenrad P ist mit einer Getriebeeingangswelle E, welche wenigstens mittelbar mit einer, dem Antrieb dienenden Antriebsmaschine koppelbar ist, vorzugsweise mit einem Schwungrad 12 einer Verbrennungskraftmaschine derart verbunden, daß die Kraft vom Schwungrad 12 auf das Pumpenrad P übertragen wird. Das Turbinenrad T ist mit einer Turbinenradwelle 13 drehfest verbunden. Um die Vorteile der hydrodynamischen Drehmomentenübertragung mit Lock-up, d.h. Überbrückungskupplung zu nutzen, welche im folgenden wären:
- selbsttätige stufenlose Einstellung des Verhältnisses zwischen der Anund Abtriebsdrehzahl entsprechend der Belastung auf der Abtriebsseite
- Zurverfügungstehen des maximalen Drehmomentes für einen Anfahrvorgang oder Beschleunigungsvorgang aufgrund der größten Drehmomentenwandlung bei Stillstand des Turbinenrades
- Möglichkeit der Wärmeabfuhr durch Fremd- oder Oberflächenkühlung
- Trennung des hydrodynamischen Drehzahl-/Drehmomentenwandlers vom Abtrieb, bei Leerlaufdrehzahl und Übertragung eines geringen Restmomentes, so daß ein Abwürgen der Antriebsmaschine von der Abtriebsseite her nicht möglich ist und der Kraftstoffverbrauch gering gehalten wird;
- verschleißfreie Leistungsübertragung
und gleichzeitig die Nachteile einer hydrodynamischen Leistungsübertragung, welche im wesentlichen in einem oftmals nicht ausreichend erzielbaren Wirkungsgrad besteht, um mit einem hydrodynamischen Getriebe allein arbeiten zu können, da Verlustleistungsanteile, die sich aus Reibungs- und Stoßverlusten zusammensetzen, die übertragbare Gesamtleistung vermindern und die erzielten Wandlungsbereiche für den Fahrzeugeinsatz oft nicht ausreichend sind, wird der hydrodynamische Drehzahl/Drehmomentenwandler 3 nur in den unteren Gangstufen, vorzugsweise nur während des Anfahrvorganges, zur Leistungsübertragung genutzt. Zur Verbesserung des Übertragungswirkungsgrades wird daher der hydrodynamische Drehzahl-/Drehmomentenwandler 3 aus der Leistungsübertragung herausgenommen, vorzugsweise durch Überbrückung. Zu diesem Zweck ist zwischen dem Turbinenrad T und dem Schwungrad 12 bzw. der Getriebeeingangswelle eine Überbrückungskupplung 14 angeordnet.

Das erste Leitrad L1 ist auf der Turbinenseite zwischen dem Turbinenrad T und dem Pumpenrad P angeordnet und durch einen Freilauf gelagert. Das erste Leitrad L1 ist mit einer ersten Leitradwelle 15 drehfest verbindbar, wobei zwischen dem ersten Leitrad L1 und der Leitradwelle 15 ein Freilauf 16 vorgesehen ist, welcher derart ausgelegt wird, daß er ein Moment auf die erste Leitradwelle 15 überträgt, wenn sich das erste Leitrad L1 in umgekehrter Richtung, d.h. entgegengesetzter Drehrichtung, zum Turbinenrad T dreht und welcher leerläuft, wenn das erste Leitrad L1 in normaler Richtung, d.h. in gleicher Rotationsrichtung wie das Turbinenrad T rotiert. Das zweite Leitrad L2 ist zwischen dem Turbinenrad T und dem Pumpenrad P auf der Pumpenseite angeordnet und über eine zweite Leitradwelle 17 mit dem Gehäuse 11 koppelbar. Zwischen dem zweiten Leitrad L2 und der zweiten Leitradwelle 17 ist ein zweiter Freilauf 18 angeordnet, mittels welchem das zweite Leitrad L2 mit der zweiten Leitradwelle 17 gekoppelt werden kann, jedoch nur dann, wenn sich das zweite Leitrad L2 in entgegengesetzter Richtung zum Turbinenrad T dreht.

Das Pumpenrad P ist mit einer Pumpenradwelle 19 drehfest verbunden, welche über ein Lager im Gehäuse 11 drehbar gelagert ist.

Zur Realisierung der einzelnen Gangstufen und Auslegung der einzelnen Gänge sind den einzelnen Elementen des hydrodynamisch-mechanischen Verbundgetriebes 1 Schaltelemente zugeordnet. Zwischen dem hydrodynamischen Getriebeteil 2 und dem mechanischen Getriebeteil 4 sind eine erste Kupplungseinrichtung K1 und eine erste Bremseinrichtung B1 vorgesehen.

Das Turbinenrad T und die mit diesem drehfest koppelbare Turbinenradwelle 13 ist mit dem Sonnenrad 8.1 des zweiten Planetenradsatzes 8 des mechanischen Drehzahl-/Drehmomentenwandlers 5 gekoppelt. Vorzugsweise sind das Turbinenrad T und das Sonnenrad 8.1 des zweiten Planetenradsatzes 8 auf einer gemeinsamen Welle, hier der Turbinenradwelle 13, angeordnet, die Turbinenradwelle 13 trägt dabei auch die Kupplungsscheibe 20 der ersten Kupplung K1. Die erste Kupplung K1 weist des weiteren eine Koppelung über Kupplungsbeläge auf der Leitradwelle 15 auf. Des weiteren ist das erste Leitrad L1 über die erste Leitradwelle 15 mit dem Sonnenrad 7.1 des ersten Planetenradsatzes 7 des mechanischen Drehzahl-/Drehmomentenwandlers 5 verbindbar. Die Kupplungsabdeckung 21 ist dabei vorzugsweise einstückig mit der ersten Leitradwelle 15 verbunden. Die erste Leitradwelle 15 ist als Hohlwelle ausgeführt, welche die Leitradwelle 13 in Umfangsrichtung umschließt.

Mit der Kupplungsabdeckung 21 der ersten Kupplung K1 ist ein vorzugsweise scheibenförmiges Element 22 verbunden und bildet mit dieser eine bauliche Einheit, an deren äußerem Umfangsbereich 23 die erste Bremseinrichtung B1 angreifen kann. Die erste Bremseinrichtung B1 dient dabei zum Festsetzen des ersten Leitrades L1 über die Leitradwelle 15 und/oder des ersten Sonnenrades 7.1 des ersten Planetenradsatzes 7 des mechanischen Drehzahl-/Drehmomentenwandlers 5. Weitere Schaltelemente, hier die Schaltelemente in Form von Bremseinrichtungen B2 und B3, sind den einzelnen Planetenradsätzen 7 bzw. 8 des mechanischen Drehzahl/Drehmomentenwandlers 5 zugeordnet. Im dargestellten Fall ist das zweite Bremselement B2 dem Hohlrad 7.3 des ersten Planetenradsatzes 7 und das dritte Bremselement B3 dem Hohlrad 8.3 des zweiten Planetenradsatzes 8 des mechanischen Drehzahl-/Drehmomentenwandlers 5 zugeordnet. Die Kopplung des mechanischen Drehzahl-/Drehmomentenwandlers 5 mit der Getriebeeingangswelle E über den hydrodynamischen Drehzahl/Drehmomentenwandler 3 bzw. dessen Überbrückung über die Überbrückungskupplung 14 erfolgt dabei durch Kopplung des Turbinenrades T bzw. der Turbinenradwelle 13 mit einem ersten Getriebeelement des mechanischen Drehzahl-/Drehmomentenwandlers 5 und des ersten Leitrades L1 mit einem weiteren zweiten Getriebeelement des mechanischen Drehzahl-/Drehmomentenwandlers 5. Als erstes Getriebeelement des mechanischen Drehzahl-/Drehmomentenwandlers 5 fungiert hier das Sonnenrad 8.1 des zweiten Planetenradsatzes 8. Als zweites Getriebeelement fungiert das Sonnenrad 7.1 des ersten Planetenradsatzes 7. Die mit den beiden Sonnenrädern 7.1 bzw. 8.1 gekoppelten Wellen, hier die erste Leitradwelle 15 und die Turbinenradwelle 13, fungieren als Eingangswellen des mechanischen Drehzahl-/Drehmomentenwandlers 5. Ein weiteres drittes Getriebeelement ist über den Gruppensatz 6 mit der Getriebeausgangswelle A verbunden. Als drittes Getriebeelement fungiert der Planetenträger 9, welcher von beiden Planetenradsätzen 7 und 8 gemeinsam genutzt wird. Das dritte Getriebeelement des mechanischen Drehzahl/Drehmomentenwandlers 5 ist mit dem Eingang, welcher von einem ersten Getriebeelement des Gruppensatzes bzw. der Splitgruppe 6 gebildet wird, verbunden. Vorzugsweise wird diese Verbindung über eine drehfeste Kopplung vom dritten Getriebeelement des mechanischen Drehzahl/Drehmomentenwandlers 5 und ersten Getriebeelement des Gruppensatzes 6 realisiert. Beide sind vorzugsweise auf einer gemeinsamen Verbindungswelle 24 angeordnet. Das erste Getriebeelement des Gruppensatzes 6 wird von dessen Planetenträger 10.4 gebildet. Ein zweites Getriebeelement des Gruppensatzes 6 ist drehfest mit der Getriebeausgangswelle A des hydrodynamisch-mechanischen Verbundgetriebes 1 verbunden. Als zweites Getriebeelement fungiert im dargestellten Fall das Hohlrad 10.3 des Planetenradsatzes 10 des Gruppensatzes 6. Während der mechanische Drehzahl/Drehmomentenwandler 5 in Kombination mit dem hydrodynamischen Drehzahl-/Drehmomentenwandler 3 der Realisierung von drei Gangstufen dient, können durch Kombination des hydrodynamischen Drehzahl/Drehmomentenwandlers 3, des mechanischen Drehzahl/Drehmomentenwandlers 5 mit dem Gruppensatz 6 im dargestellten Fall sechs Gangstufen realisiert werden. Zu diesem Zweck sind dem Gruppensatz 6 jeweils eine weitere Kupplungseinrichtung, hier die zweite Kupplungseinrichtung K2 und eine weitere Bremseinrichtung, hier die vierte Bremseinrichtung B4, zugeordnet. Das vierte Bremselement dient dabei der Feststellung des Sonnenrades 10.1 des Gruppensatzes 6. Die zweite Kupplungseinrichtung K2 ermöglicht die starre Kopplung zwischen dem Planetenträger 10.4 und dem Sonnenrad 10.1 des Planetenradsatzes 10 des Gruppensatzes 6. Neben dem Gruppensatz 6 ist im Getriebe 1 ein hydrodynamischer Retarder 25 angeordnet. Dieser übernimmt hier die Funktion eines Sekundärretarders, d. h. der Abbremsung der Getriebeausgangswelle. Räumlich ist der hydrodynamische Retarder 25 jedoch vor dem Gruppensatz 6 in Kraftflußrichtung im Traktionsbetrieb betrachtet, angeordnet. Der hydrodynamische Retarder 25 ist somit im hydrodynamisch-mechanischen Verbundgetriebe 1 im Getriebegehäuse 11 integriert. Der hydrodynamische Retarder 25 umfaßt ein feststehendes Statorschaufelrad 26, welches im dargestellten Fall gestellfest mit dem Gehäuse 11 verbunden ist. Des weiteren weist der hydrodynamische Retarder 25 ein Rotorschaufelrad 27 auf, welches mit dem Ausgang des mechanischen Drehzahl-/Drehmomentenwandlers 5 und dem Eingang des Gruppensatzes 6 gekoppelt ist. Dies bedeutet im dargestellten Fall, daß das Rotorschaufelrad 27, der Planetenträger 9 sowie der Planetenträger 10.4 miteinander drehfest koppelbar sind, vorzugsweise auf einer gemeinsamen Welle angeordnet sind. Diese ist hier mit 28 bezeichnet.

Die räumlich nahe Anordnung des hydrodynamischen Retarders 25 und des hydrodynamischen Drehzahl-/Drehmomentenwandlers 3 ermöglichen es, die erforderlichen Bauelemente zur Betriebsmittelversorgung der hydrodynamischen Bauteile ebenfalls räumlich nahe beieinander im Getriebe 1 anzuordnen. Die erforderlichen Betriebsmittelleitungen können dabei sehr kurz ausgeführt werden, insbesondere können die gleichen Betriebsmittelversorgungsleitungen sowohl für den hydrodynamischen Retarder 25 als auch den hydrodynamischen Drehzahl/Drehmomentenwandler 3 genutzt werden. In Analogie gilt diese Aussage auch für die erforderlichen Kühlkreisläufe, welche den Betriebsmittelversorgungskreisläufen unmittelbar zugeordnet sein können und vorzugsweise über einen gemeinsamen Wärmetauscher miteinander gekoppelt sind. Die konstruktive Ausführung des Getriebes mit im Getriebe integriertem hydrodynamischen Retarder 25 in der Funktion als Sekundärretarder und dem Gruppensatz ermöglicht eine kompakte Getriebebauweise, welche vor allem auch zur Realisierung eines Baukastensystems geeignet ist.

Die einzelnen Elemente des Betriebsmittelversorgungssystems, beispielsweise Betriebsmittelversorgungsleitungen, Zahnradpumpe, Wärmetauscher, können ebenfalls im Getriebegehäuse integriert werden. Die kurze Leitungsführung hat des weiteren den Vorteil eines geringen hydrodynamischen Strömungswiderstandes sowie der Verringerung der Ansprechzeiten der hydrodynamischen Bauelemente, insbesondere des hydrodynamischen Retarders 25 und des hydrodynamischen Drehzahl/Drehmomentenwandlers 3. Der energetische Wirkungsgrad bezüglich der hydrodynamischen Komponenten kann dadurch erheblich vergrößert werden.

Die dargestellte konstruktive Ausführung des mechanisch-hydrodynamischen Verbundgetriebes 1 stellt eine vorteilhafte Variante dar. Im einzelnen wird es aufgrund der baukastenartigen Zusammenfügung möglich, ein Grundgetriebe, umfassend den hydrodynamischen Getriebeteil 2 und den mechanischen Drehzahl-/Drehmomentenwandler 5 des mechanischen Getriebeteils 4, mit einem beliebigen Gruppensatz 6 zu kombinieren, indem der Gruppensatz 6 lediglich an den Ausgang des Grundgetriebes angefügt, insbesondere angeflanscht, wird. Des weiteren bedarf es keines erheblichen zusätzlichen Aufwandes, den hydrodynamischen Retarder 25 vor dem Gruppensatz, vorzugsweise auch vor dem mechanischen Drehzahl-/Drehmomentenwandler im Getriebegehäuse zu integrieren.

Die einzelnen Schalteinrichtungen K1, K2 sowie B1 bis B4 sind vorzugsweise in Lamellenbauart ausgeführt. Andere Ausführungen sind jedoch ebenfalls denkbar.

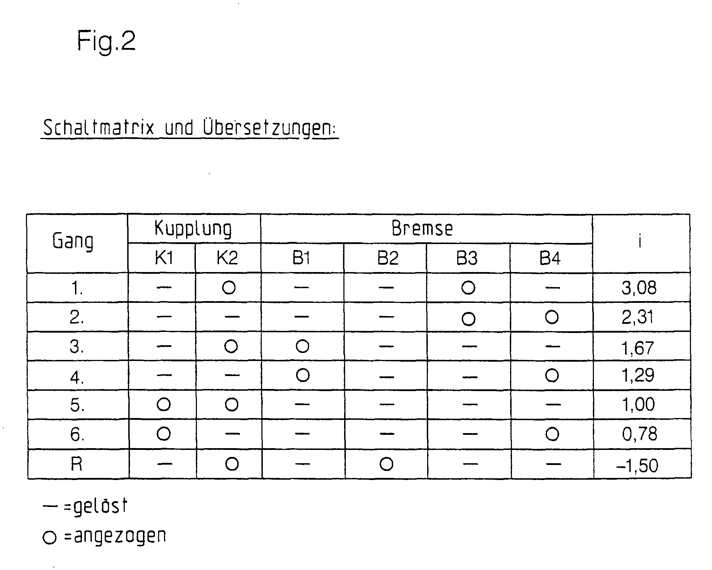

Die Figur 2 verdeutlicht anhand eines Schaltschemas eine mögliche Funktionsweise des in der Figur 1 beschriebenen Getriebes.

In der ersten Gangstufe ist das dritte Bremselement B3 betätigt, während die anderen Bremselemente und Kupplungen im mechanischen Drehzahl/Drehmomentenwandler 5, das zweite Bremselement B2, das erste Bremselement B1 sowie das erste Kupplungselement K1 nicht betätigt bzw. ausgerückt sind. Somit ist nur das Hohlrad 8.3 des zweiten Planetenradsatzes am Gehäuse 11 festgestellt, während die anderen Planetenradsätze des mechanischen Drehzahl-/Drehmomentenwandlers 5 miteinander kämmen und eine Einheit bilden. Das erste Leitrad L1 wirkt in dem durch den Betriebsmodus der ersten Gangstufe gesteuerten Niedriggang-Geschwindigkeitsbereich reversierend über den Drehzahl/Drehmomentenwandlers 5 auf den Steg und verstärkt das Abtriebsmoment. Im Gruppensatz 6 ist in dieser Gangstufe die erste Kupplungseinrichtung K2 betätigt. Diese ermöglicht es, daß das Hohlrad 10.3 mit der gleichen Drehzahl wie der Steg 10.4 angetrieben wird, d. h. im Ergebnis eine Übersetzung im Gruppenschaltsatz von 1 erzielt wird. Die Umschaltung in die zweite Gangstufe erfolgt durch Lösen der zweiten Kupplungseinrichtung K2 und Betätigung der vierten Bremseinrichtung B4. Bei Ansteigen des Geschwindigkeitsverhältnisses wird durch eine automatische Steuerung auf die dritte Gangstufe umgeschalten. In diesem Fall wird das dritte Bremselement außer Betrieb genommen und das erste Bremselement B1 betätigt. Des weiteren sind die erste Kupplungseinrichtung K1 sowie das vierte Bremselement B4 außer Betrieb und die zweite Kupplungseinrichtung K2 betätigt. Die erste Leitradwelle 15 sowie das Sonnenrad 7.1 des ersten Planetenradsatzes des mechanischen Drehzahl/Drehmomentenwandlers 5 werden somit gegenüber dem Gehäuse 11 festgestellt. Falls ohne Wandlerüberbrückungskupplung gefahren wird, ergeben sich wie im ersten Gang sehr hohe Zugkräfte, da das Leitraddrehmoment sich als Antriebsmoment über den Steg des Planetenradsatzes auswirkt. Die Drehmomente des hydrodynamischen Drehzahl-/Drehmomentenwandlers 3 entwickeln somit höhere Zugkräfte im ersten und zweiten Gang. Die Leistungsübertragung vom mechanischen Drehzahl-/Drehmomentenwandler 5 erfolgt durch weitere Drehzahl/Drehmomentenwandlung über den Gruppensatz 6 auf die Abtriebswelle A des mechanischen-hydrodynamischen Verbundgetriebes 1. Die Umschaltung in die vierte Gangstufe erfolgt durch Lösen der vierten Bremseinrichtung B4 und Betätigung der zweiten Kupplungseinrichtung K2. Die Schalteinrichtungen im Grundgetriebe bleiben analog wie in der dritten Gangstufe betätigt. Bei weiterer Vergrößerung des Geschwindigkeitsverhältnisses wird in die fünfte Gangstufe gewechselt. In der fünften Gangstufe sind dabei jeweils nur die erste Kupplungseinrichtung und die zweite Kupplungseinrichtung K1 bzw. K2 betätigt. Die Turbinenradwelle 13 dreht sich in diesem Fall analog in der gleichen Richtung wie die erste Leitradwelle 15. In der sechsten Gangstufe sind die zweite Kupplungseinrichtung K2 gelöst und die vierte Bremseinrichtung B4 betätigt. Die Leistung wird in Gang 6 direkt von der Getriebeeingangswelle E auf die Turbinenradwelle 13 und damit auf den mechanischen Drehzahl-/Drehmomentenwandler 5 übertragen.

In der Regel erfolgt bei Vergrößerung des Geschwindigkeitsverhältnisses die Überbrückung des hydrodynamischen Drehzahl-/Drehmomentenwandlers 3 mittels der Überbrückungskupplung 14. Die Leistung wird dann direkt von der Getriebeeingangswelle E auf die Turbinenradwelle 13 und damit auf den mechanischen Drehzahl-/Drehmomentenwandler 5 übertragen. Der hydrodynamische Drehzahl-/Drehmomentenwandler kommt somit nur im 1. und 2. Gang zum Einsatz.

Die drei Grundgangstufen werden somit durch den Gruppensatz 6 in jeweils zwei Teilgangstufen aufgesplittet, so daß letztendlich ein Mehrganggetriebe entsteht, im dargestellten Fall ein Sechsganggetriebe. Im einzelnen wird dies durch die wechselweise Betätigung der Schalteinrichtungen am Gruppensatz 6 realisiert. In der jeweils ersten der beiden Teilgangstufen wird die vom mechanischen Drehzahl-/Drehmomentenwandler 5 an dessen Abtriebswelle anliegende Leistung mit einem Übersetzungsverhältnis von 1 auf die Getriebeausgangswelle A übertragen. in der zweiten Teilgangstufe, welche jeweils auf die erste Teilgangsstufe folgt, erfolgt eine Übersetzung von der an dem Ausgang des mechanischen Drehzahl-/Drehmomentenwandlers 5 anliegenden Drehzahl über den Gruppensatz 6 ins Schnelle.

Die in den Figuren 1 und 2 dargestellte Ausführung eines mechanisch-hydrodynamischen Verbundgetriebes 1 stellt eine vorteilhafte Ausführung beispielhaft dar. Die Anordnung bzw. Auslegung des mechanischen Drehzahl/Drehmomentenwandlers und/oder des Gruppensatzes 6 kann jedoch auch in anderer Weise erfolgen. Der hydrodynamische Retarder 25, welcher mit der Ausgangswelle A des Getriebes 1 über den Gruppensatz 6 verbunden ist, braucht somit hinsichtlich seines Füllungsgrades entsprechend der Schaltphilosophie auch nur bei jeder zweiten Schaltung angepaßt werden. Dies bedeutet, daß lediglich beim jeweils übernächsten Gang der Füllungsgrad nachgeregelt werden muß.

Um gangunabhängig gleiche Bremsmomente zu erzielen, muß die Füllung des Retarders bei Übersetzung der Nachschaltgruppe ins Schnelle größer sein, als bei der "Direktübersetzung" von 1,0. Je nach Rückschaltstrategie muß die Füllung angepaßt werden, wenn alle Gänge nacheinander zurückgeschaltet werden. Die Füllung muß nicht angepaßt werden, wenn nur zu jedem übernächsten Gang zurückgeschaltet wird.

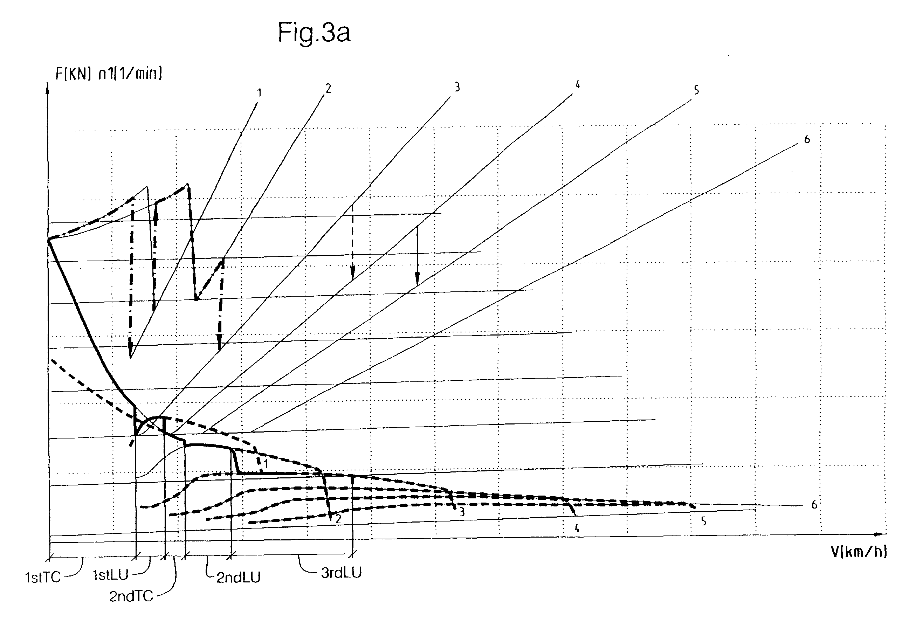

Die Figuren 3a bis 3d verdeutlichen die Zugkraftdiagramme für unterschiedliche Anfahrvarianten mit unterschiedlichen Effekten. Dabei sind lediglich die Zugkraftverläufe der erfindungsgemäß vorgesehenen Anfahrvarianten verstärkt eingezeichnet.

Die Fig. 3a verdeutlicht anhand des Zugkraft-/Geschwindigkeitsdiagrammes den Zugkraftverlauf für eine erste Anfahrvariante, wie sie hauptsächlich für den Einsatz in Überlandbussen verwendet wird. Bei dieser sind vier Schaltvorgänge erforderlich, um im unteren Geschwindigkeitsbereich eine hohe Anfahrzugkraft bereitstellen zu können und den mittleren Geschwindigkeitsbereich zu erreichen. Für die Anfahrvorgänge ist im Gruppensatz bzw. Nachschaltsatz die zweite Kupplungseinrichtung betätigt. Dabei erfolgt die Leistungsübertragung zuerst über den hydrodynamischen Drehzahl-/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist), danach erfolgt die Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl/Drehmomentenwandler bei Betätigung der Schaltelemente im ersten Gang. Der zweite Schaltvorgang dient der Realsierung der Leistungsübertragung über den hydrodynamischen Drehzahl-/Drehmomentenwandler im zweiten Gang und der dritte Schaltvorgang der Leistungsübertragung von der Getriebeingangswelle unter Umgehung des hydrodynamischen Drehzahl/Drehmomentenwandlers bei Betätigung der Schaltelemente im zweiten Gang. Nach dem vierten Schaltvorgang erfolgt die Leistungsübertragung von der Getriebeingangswelle unter Umgehung des hydrodynamischen Drehzahl/Drehmomentenwandlers bei Betätigung der Schaltelemente wie im dritten Gang.

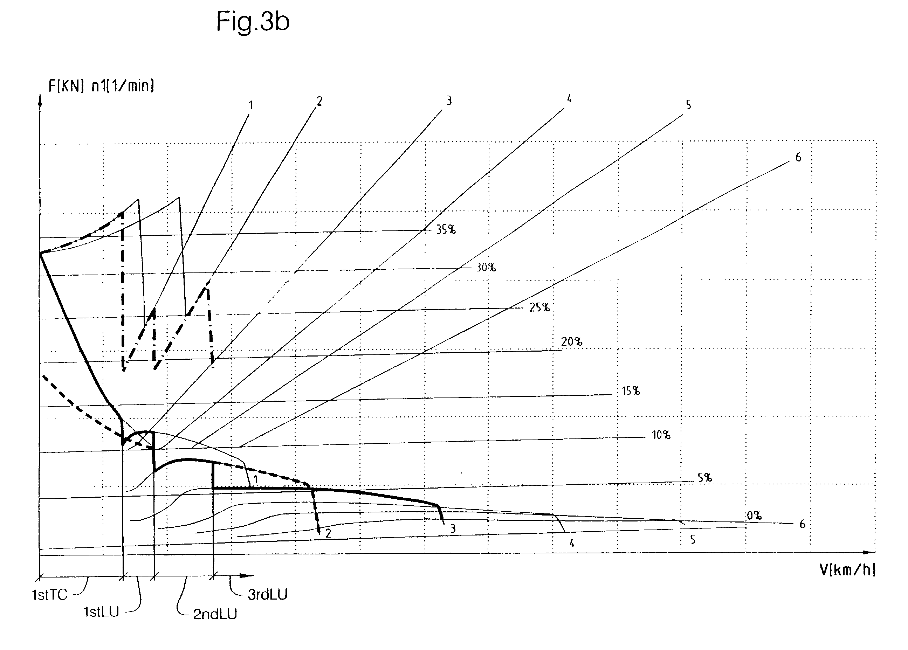

Die Figur 3b verdeutlicht eine zweite Anfahrvariante Variante mit drei Schaltvorgängen, welche eine sparsame Betriebsweise des gesamten Antriebsstranges ermöglicht. Hier erfolgt die Leistungsübertragung zuerst über den hydrodynamischen Drehzahl-/Drehmomentenwandler bei Betätigung der Schaltelemente am mechanischen Drehzahl-/Drehmomentenwandler wie im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist). Nach der Leistungsübertragung über den hydrodynamischen Drehzahl-/Drehmomentenwandler erfolgt durch Betätigung der Wandlerüberbrückungskupplung die Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente wie im ersten Gang. Der zweite Schaltvorgang dient der Realisierung der Leistungsübertragung von der Getriebeingangswelle unter Umgehung des hydrodynamischen Drehzahl-/Drehmomentenwandlers bei Betätigung der Schaltelemente am mechanischen Drehzahl/Drehmomentenwandler wie im zweiten Gang. Nach dem dritten Schaltvorgang erfolgt die Leistungsübertragung von der Getriebeingangswelle unter Umgehung des hydrodynamischen Drehzahl-/Drehmomentenwandlers bei Betätigung der Schaltelemente am mechanischen Drehzahl/Drehmomentenwandler wie im dritten Gang.

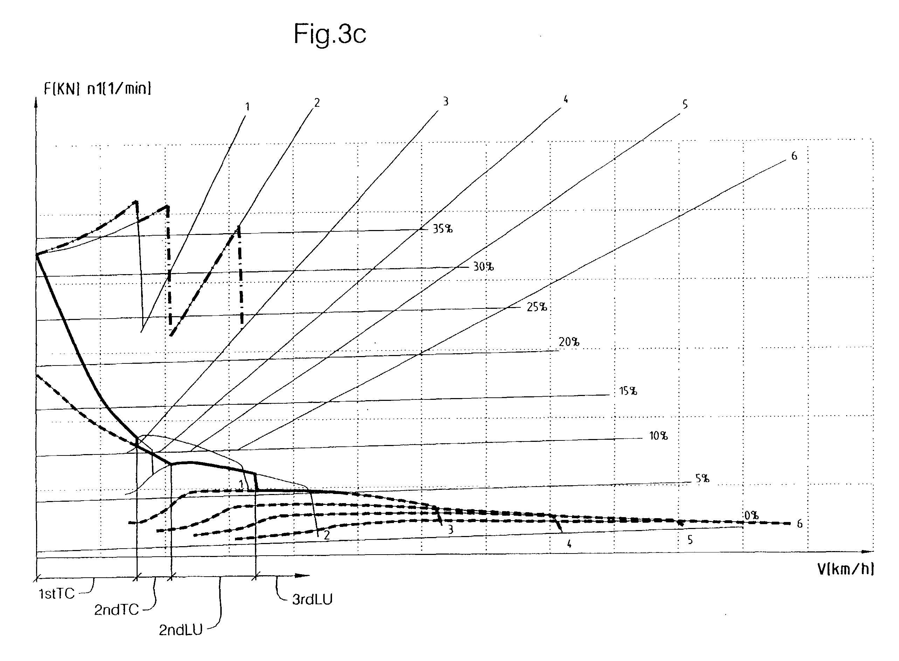

Die Figur 3c verdeutlicht den Zugkraftverlauf für die dritte Variante mit drei Schaltvorgängen, welche für einen besonderen komfortablen Anfahrvorgang steht. Daraus wird ersichtlich, daß der Zugkraftverlauf nahezu ohne Sprünge sehr harmonisch verläuft. Um dies zu erreichen, wird die Leistungsübertragung über den hydrodynamischen Drehzahl/Drehmomentenwandler im ersten Gang auf den mechanischen Drehzahl/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist) vorgenommen. Nach dem ersten Schaltvorgang wird die Leistung über den hydrodynamischen Drehzahl-/Drehmomentenwandler bei Betätigung der Schaltelemente am mechanischen Drehzahl-/Drehmomentenwandler wie im zweiten Gang auf den mechanischen Drehzahl-/Drehmomentenwandler übertragen. Der zweite Schaltvorgang dient der Realisierung der Leistungsübertragung von der Getriebeeingangswelle unter Umgehung des hydrodynamischen Getriebeteiles, insbesondere des hydrodynamischen Drehzahl/Drehmomentenwandlers auf den mechanischen Drehzahl/Drehmomentenwandler bei Betätigung der Schaltelemente wie im zweiten Gang und der dritte Schaltvorgang dient der Leistungsübertragung von der Getriebeingangswelle unter Umgehung des hydrodynamischen Drehzahl/Drehmomentenwandlers bei Betätigung der Schaltelemente im dritten Gang. Diese Anfahrvariante steht für eine komfortable Fahrweise.

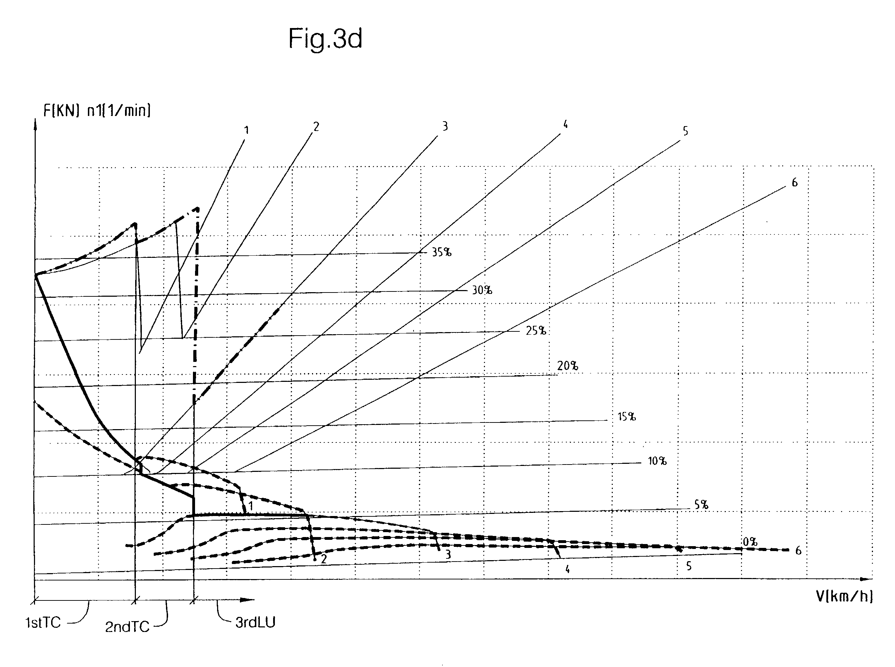

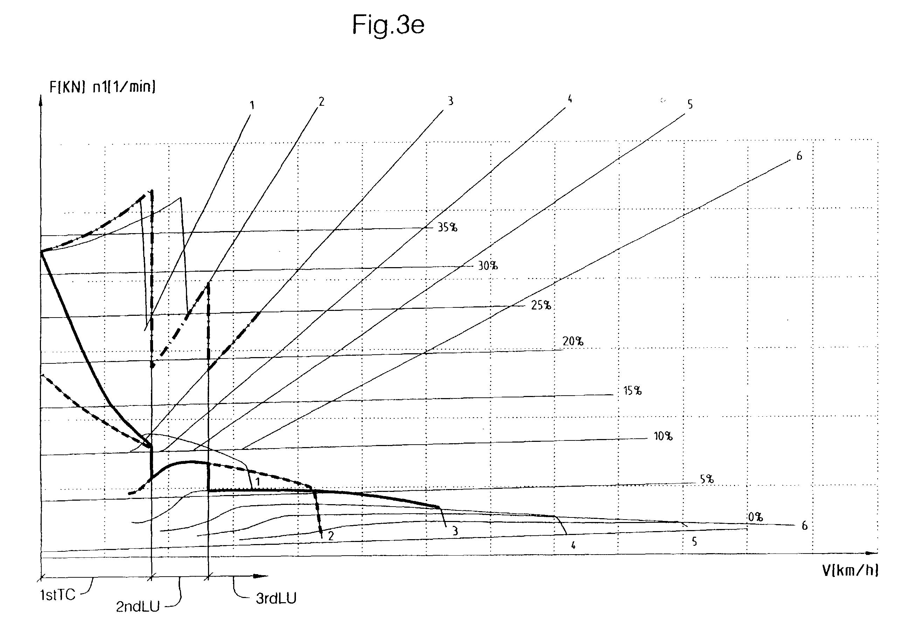

Die Figuren 3d und 3e verdeutlichen Zugkraftverläufe für Anfahrkonzepte mit nur zwei Schaltvorgängen. Beim Anfahrkonzept entsprechend der Figur 3d ("Komfort") erfolgt zuerst die Leistungsübertragung über den hydrodynamischen Drehzahl-/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist) und nach dem ersten Schaltvorgang über den hydrodynamischen Drehzahl-/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils größere Übersetzung eingestellt ist). Der zweite Schaltvorgang dient der Realisierung der Leistungsübertragung von der Getriebeingangswelle unter Umgehung des hydrodynamischen Drehzahl-/Drehmomentenwandlers bei Betätigung der Schaltelemente im dritten Gang.

Zur Erzielung eines Zugkraftverlaufes entsprechend der Figur 3e ("Kraftstoffsparen") wird die Leistung zuerst über den hydrodynamischen Drehzahl-/Drehmomentenwandler im ersten Gang auf den mechanischen Drehzahl-/Drehmomentenwandler (d.h. Betätigung der Schaltelemente wie im ersten Gang, wobei die Schaltelemente des Nachschaltsatzes derart betätigt sind, daß nur die jeweils größere Übersetzung eingestellt ist) übertragen und anschließend, nach dem ersten Schaltvorgang unter Umgehung des hydrodynamischen Drehzahl-/Drehmomentenwandlers bei Betätigung der Schaltelemente im zweiten Gang. Nach dem zweiten Schaltvorgang erfolgt dann die Leistungsübertragung von der Getriebeingangswelle unter Umgehung des hydrodynamischen Drehzahl-/Drehmomentenwandlers bei Betätigung der Schaltelemente im dritten Gang.

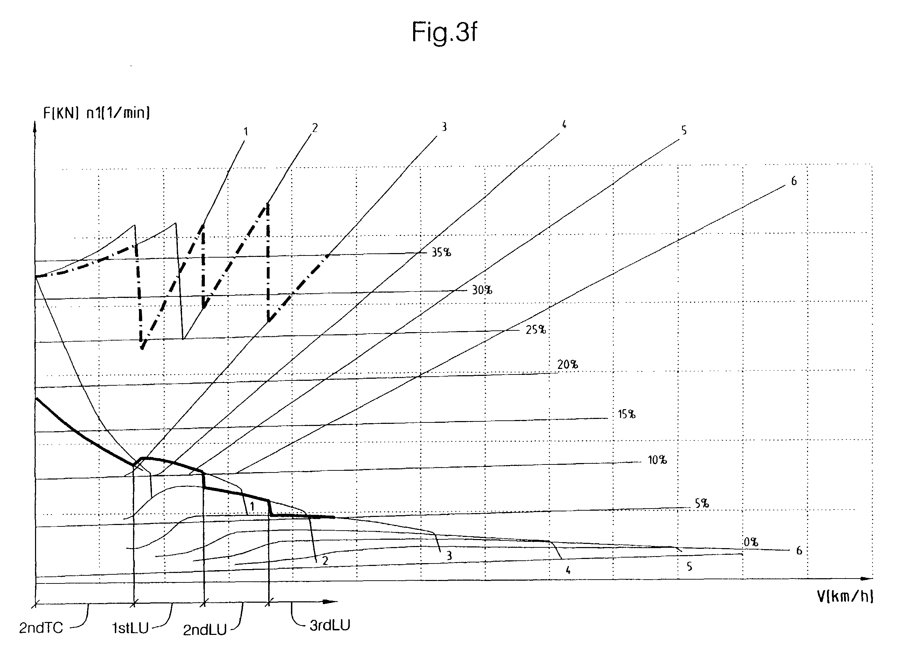

Die Figur 3f verdeutlicht den Zugkraftverlauf für ein weiteres Anfahrkonzept, welches ebenfalls als Sparprogramm zum Einsatz kommen kann mit drei Schaltvorgängen. Dabei erfolgt die Leistungsübertragung zuerst über den hydrodynamischen Drehzahl-/Drehmomentenwandler im zweiten Gang auf den mechanischen Drehzahl-/Drehmomentenwandler (d.h. Betätigung der Schaltelemente wie im zweiten Gang, wobei die Schaltelemente des Nachschaltsatzes derart betätigt sind, daß nur die jeweils größere Übersetzung eingestellt ist) und anschließend von der Getriebeingangswelle unter Umgehung des hydrodynamischen Getriebeteiles, insbesondere des hydrodynamischen Drehzahl-/Drehmomentenwandlers auf den mechanischen Drehzahl-/Drehmomentenwandler bei Betätigung der Schaltelemente im ersten Gang. Nach dem zweiten Schaltvorgang erfolgt die Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl/Drehmomentenwandler bei Betätigung der Schaltelemente im zweiten Gang und nach dem dritten Schaltvorgang von der Getriebeingangswelle unter Umgehung des hydrodynamischen Drehzahl-/Drehmomentenwandlers bei Betätigung der Schaltelemente im dritten Gang.

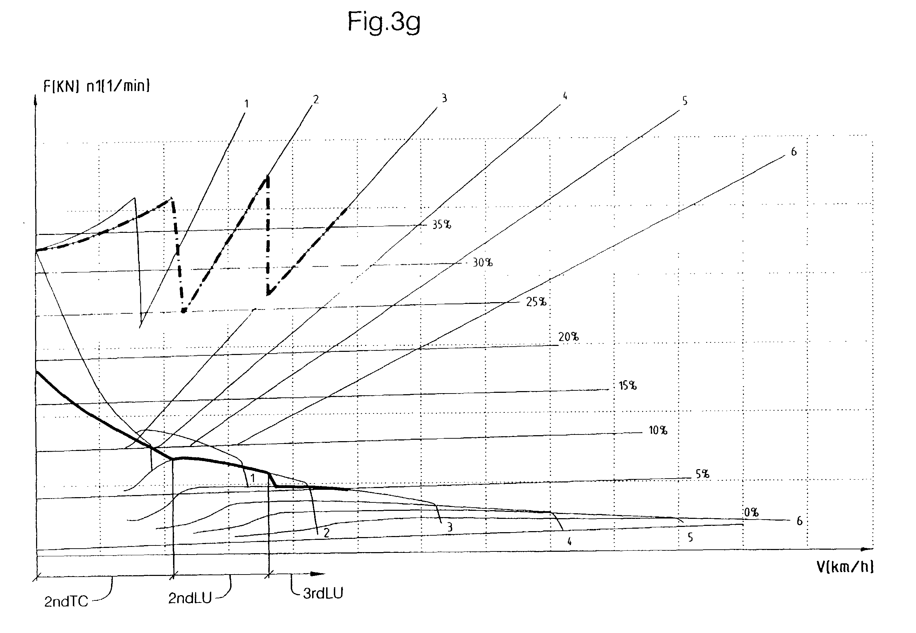

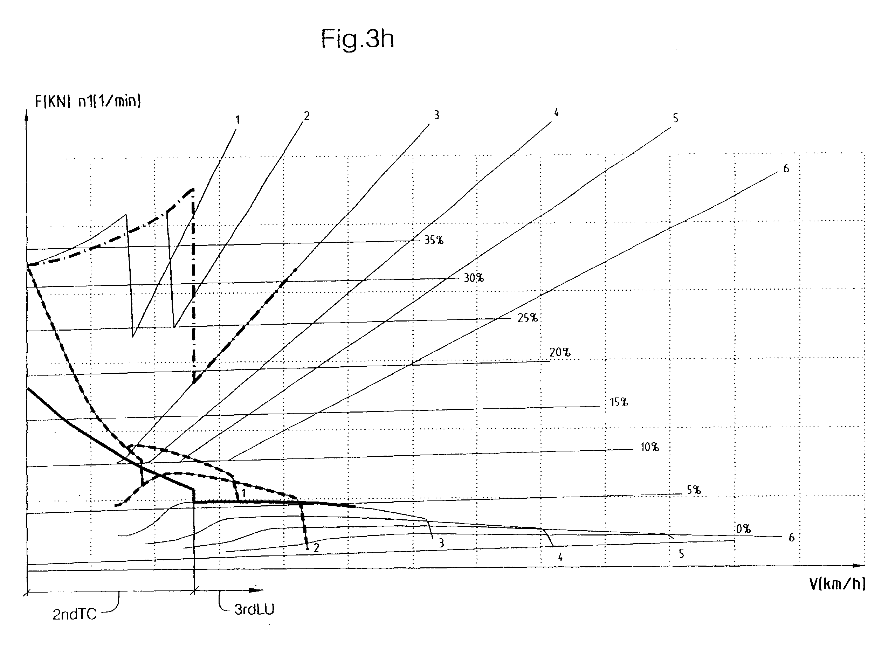

Die Figuren 3g und 3h verdeutlichen Zugkraftverläufe für Anfahrkonzepte mit geringen Schaltzahlen und möglichst harmonischem Zugkraftverlauf ("Komfort").

Zur Erzielung eines Zugkraftverlaufes wie in der Figur 3g dargestellt, erfolgt die Leistungsübertragung über den hydrodynamischen Drehzahl/Drehmomentenwandler im zweiten Gang auf den mechanischen Drehzahl/Drehmomentenwandler (d.h. Betätigung der Schaltelemente wie im zweiten Gang, wobei die Schaltelemente des Nachschaltsatzes derart betätigt sind, daß nur die jeweils größere Übersetzung eingestellt ist). Das Anfahren erfolgt sozusagen im zweiten Wandlergang. Nach dem ersten Schaltvorgang wird die Leistungsübertragung von der Getriebeingangswelle unter Umgehung des hydrodynamischen Getriebeteiles, insbesondere des hydrodynamischen Drehzahl-/Drehmomentenwandlers auf den mechanischen Drehzahl/Drehmomentenwandler bei Betätigung der Schaltelemente im zweiten Gang und nach dem zweiten Schaltvorgang unter Umgehung des hydrodynamischen Drehzahl-/Drehmomentenwandlers bei Betätigung der Schaltelemente im dritten Gang vorgenommen.

Der Zugkraftverlauf gemäß Figur 3h stellt sich ein, wenn die Leistungsübertragung zuerst über den hydrodynamischen Drehzahl/Drehmomentenwandler im zweiten Gang auf den mechanischen Drehzahl/Drehmomentenwandler (d.h. Betätigung der Schaltelemente wie im zweiten Gang, wobei die Schaltelemente des Nachschaltsatzes derart betätigt sind, daß nur die jeweils größere Übersetzung eingestellt ist) erfolgt und anschließend unter Umgehung des hydrodynamischen Drehzahl/Drehmomentenwandlers bei Betätigung der Schaltelemente im dritten Gang auf die Getriebeausgangswelle übertragen wird.

Da es sich bei derartigen Mehrganggetrieben in der Regel um automatische Getriebe handelt, deren Ansteuerung über eine dem Getriebe zugeordnete Steuer-bzw. Regelvorrichtung erfolgt, können diese Anfahrkonzepte zur Ansteuerung der einzelnen Getriebekomponenten in dieser abgelegt werden und somit dem Fahrer zur Auswahl gestellt werden. Sie sind besonders dann interessant anzuwenden, wenn kleinere Endauslegungsgeschwindigkeiten zum Einsatz kommen.

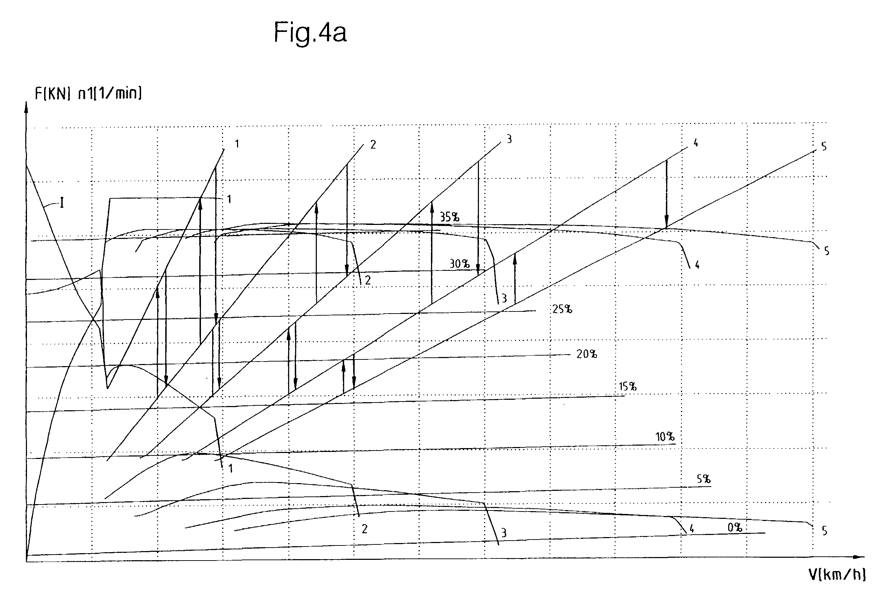

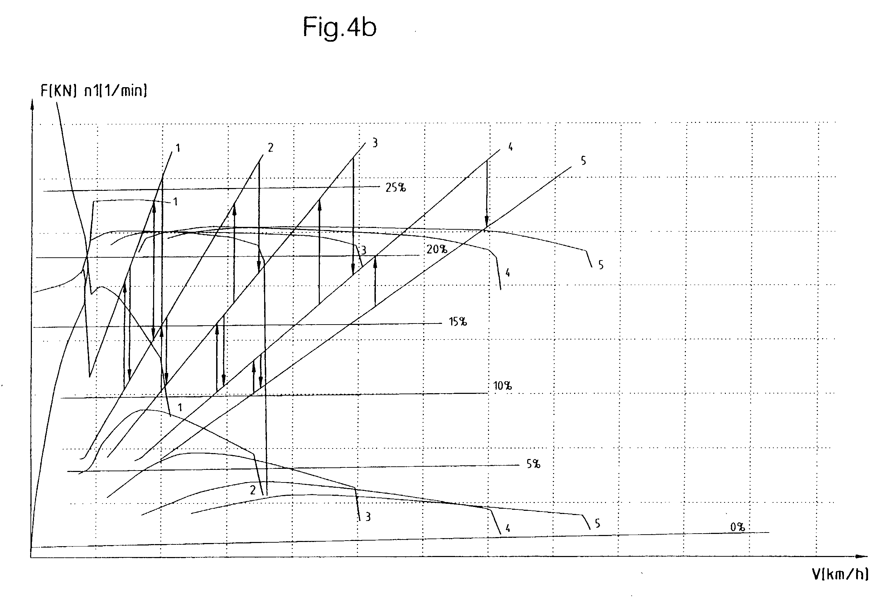

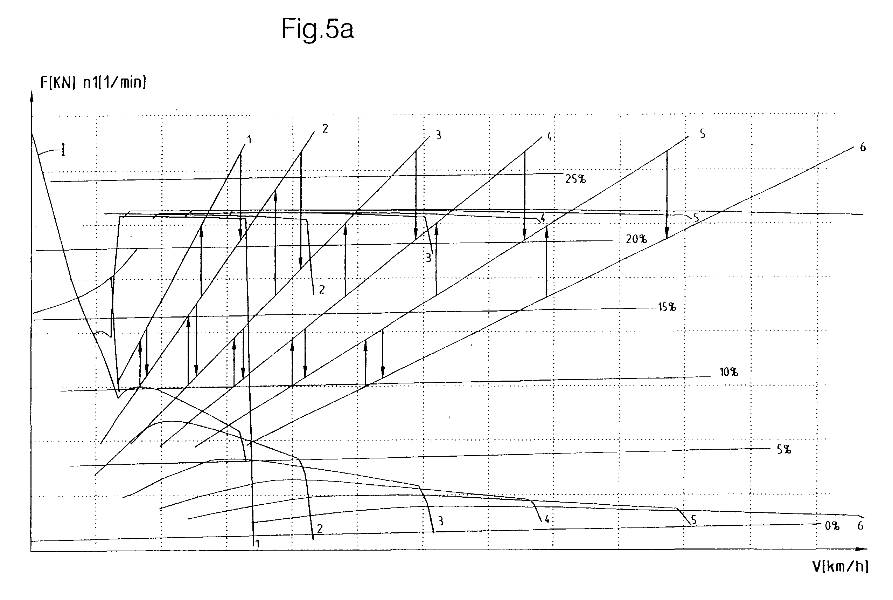

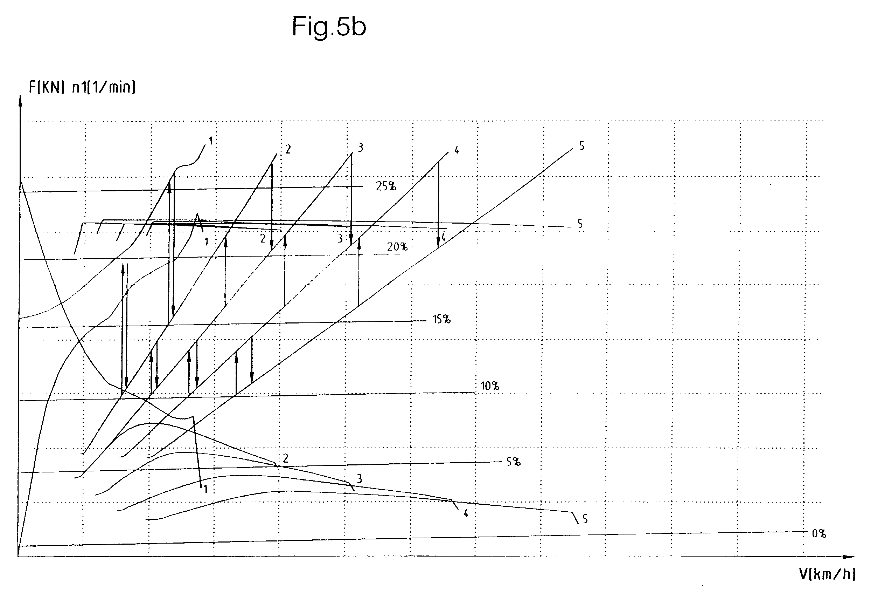

In den Figuren 4a und 4b sind beispielhaft Zugkraftdiagramme l eines konventionellen Mehrgang-Verbundgetriebes für den Einsatz in Überlandfahrzeugen (4a) und Stadtfahrzeugen (4b) dargestellt. Demgegenüber verdeutlichen die Figuren 5a und 5b Zugkraftdiagramme I eines erfindungsgemäß gestalteten und ausgelegten Mehrgang-Verbundgetriebes bei Endgeschwindigkeitsauslegung für den Einsatz in Überlandfahrzeugen (5a) und Stadtfahrzeugen (5b).

## Patentansprüche

1. Hydrodynamisch-mechanisches Mehrgangverbundgetriebe mit wenigstens vier Gängen;
1.1 mit einer Getriebeeingangswelle (E) und einer Getriebeausgangswelle (A);
1.2 mit einem hydrodynamischen Getriebeteil (2) und einem mechanischen Getriebeteil (4);
1.3 der hydrodynamische (2) und der mechanische (4) Getriebeteil sind in Leistungsflußrichtung betrachtet in Reihe geschalten, wobei Mittel zur Umgehung des hydrodynamischen Getriebeteiles (2) bei der Leistungsübertragung vorgesehen sind;
1.4 der hydrodynamische Getriebeteil (2) umfaßt wenigstens einen hydrodynamischen Drehzahl-/Drehmomentenwandler (3);
1.5 der mechanische Getriebeteil (4) umfaßt eine mechanische Drehzahl/Drehmomentenwandlungseinrichtung (5) mit wenigstens zwei Planetenradsätzen (7, 8) mit einer Kopplung zwischen einem ersten Getriebeelement (7.2) des ersten Planetenradsatzes (7) und einem ersten Getriebeelement (8.2) des zweiten Planetenradsatzes (8), wobei die Kopplung den Abtrieb der mechanischen Drehzahl/Drehmomentenwandlungseinrichtung (5) bildet;
**gekennzeichnet durch** die folgenden Merkmale:
1.6 der mechanische Getriebeteil (4) umfaßt des weiteren einen mechanischen Nachschaltsatz (6), umfassend wenigstens einen Planetenradsatz (10) mit einem Sonnenrad (10.1), einem Hohlrad (10.3), Planetenrädern (10.3) und einem Planetenträger (10.4);
1.7 der Abtrieb des mechanischen Drehzahl-/Drehmomentenwandlers (5) ist mit dem Eingang des mechanischen Nachschaltsatzes (6) gekoppelt;
1.8 das erste Getriebeelement (7.2) des ersten Planetenradsatzes (7) und das erste Getriebeelement (8.2) des zweiten Planetenradsatzes (8) sowie der Eingang (10.2) des Nachschaltsatzes werden jeweils vom Steg (9) der Planetenradsätze (7, 8) gebildet;
1.9 dem Sonnenrad (10.1) des Nachschaltsatzes (6) sind eine Bremseinrichtung (B4) und eine Kupplungseinrichtung (K2) zur Kopplung des Sonnenrades (10.1) mit dem Planetenträger (10.4) zugeordnet;
1.10 der mechanische Getriebeteil (4) ist derart ausgelegt, daß die Übersetzungen in den theoretisch möglichen und aufeinanderfolgenden, einlegbaren Gangstufen Gangstufensprünge von phi ≤ 1,45 zwischen zwei theoretisch unmittelbar aufeinanderfolgenden Gangstufen bedingen.

2. Hydrodynamisch-mechanische Verbundgetriebe nach Anspruch 1, **gekennzeichnet durch** folgende Merkmale:
2.1 der mechanische Getriebeteil umfaßt wenigstens sechs theoretisch realisierbare Gangstufen;
2.2 der mechanische Getriebeteil ist derart ausgelegt, daß die mechanischen Übersetzungen in den einzelnen, theoretisch möglichen Gangstufen Gangstufensprünge
2.2.1 von phi ≤ 1,45 zwischen der ersten und der zweiten Gangstufe sowie der zweiten und der dritten Ganstufe und
2.2.2 von phi ≤ 1,35 zwischen zwei aufeinanderfolgenden Gangstufen der nachfolgenden Gänge
bedingen.

3. Hydrodynamisch-mechanisches Verbundgetriebe nach einem der Ansprüche 1 oder 2, **gekennzeichnet durch** die folgenden Merkmale: der mechanische Getriebeteil ist derart ausgelegt, daß die an der Drehzahl-/Drehmomentenwandlung beteiligten Getriebeelemente in der ersten Gangstufe eine Übersetzung im Bereich von 3 < i < 3,25 und in der letzten Gangstufe eine Übersetzung im Bereich von 0,7 < i < 0.9 realisieren.

4. Hydrodynamisch -mechanisches Verbundgetriebe nach einem der Ansprüche 1 bis 3, **dadurch gekennzeichnet, daß** der hydrodynamische Drehzahl-/Drehmomentenwandler (3) zwei Leitradeinrichtungen (L1, L2) umfaßt.

5. Hydrodynamisch-mechanisches Verbundgetriebe nach einem der Ansprüche 1 bis 4, **gekennzeichnet durch** das folgende Merkmal:
5.1 mit Mitteln zur wenigstens mittelbaren Kopplung eines weiteren zweiten Elementes des ersten Planetenradsatzes (7) und eines weiteren zweiten Elementes des zweiten Planetenradsatzes (8) mit der Getriebeeingangswelle (E).

6. Hydrodynamisch-mechanisches Verbundgetriebe nach Anspruch 5, **dadurch gekennzeichnet, daß** die Mittel zur wenigstens mittelbaren Kopplung des weiteren zweiten Elementes des ersten Planetenradsatzes (7) und des weiteren zweiten Elementes des zweiten Planetenradsatzes (8) mit der Getriebeeingangswelle (E) eine Kupplungseinrichtung (K1) zur Koppelung des zweiten Getriebeelementes des ersten Planetenradsatzes an das zweite Getriebeelement des zweiten Planetenradsatzes umfassen.

7. Hydrodynamisch-mechanisches Verbundgetriebe nach einem der Ansprüche 5 oder 6, **dadurch gekennzeichnet, daß** die Mittel zur wenigstens mittelbaren Kopplung eines weiteren zweiten Elementes des ersten Planetenradsatzes (7) und eines weiteren zweiten Elementes des zweiten Planetenradsatzes (8) mit der Getriebeeingangswelle (E) eine weitere Kupplungseinrichtung (12) zur wahlweisen Koppelung des zweiten Elementes des zweiten Planetenradsatzes an das Turbinenrad und/oder der Getriebeeingangswelle umfassen.

8. Hydrodynamisch-mechanisches Verbundgetriebe nach einem der Ansprüche 5 bis 7 **dadurch gekennzeichnet, daß** das zweite Getriebeelement des ersten Planetenradsatzes (7) mit dem ersten Leitrad (L1) des hydrodynamischen Drehzahl/Drehmomentenwandlers (3) über einen Freilauf (16) drehfest verbindbar ist.

9. Hydrodynamisch-mechanisches Verbundgetriebe nach einem der Ansprüche 5 bis 7, **dadurch gekennzeichnet, daß** das zweite Getriebeelement des ersten Planetenradsatzes (7) vom Sonnenrad (7.1) des ersten Planetenradsatzes (7) und das zweite Element des zweiten Planetenradsatzes (8) vom Sonnenrad (8.1) des zweiten Planetenradsatzes (8) gebildet wird.

10. Hydrodynamisch-mechanisches Verbundgetriebe nach einem der Ansprüche 4 bis 7, **dadurch gekennzeichnet, daß** ein zweites Leitrad (L2) des hydrodynamischen Drehzahl-/Drehmomentenwandlers (3) über einen Freilauf (18) mit dem Getriebegehäuse (11) gekoppelt ist.

11. Hydrodynamisch-mechanisches Verbundgetriebe nach einem der Ansprüche 1 bis 10, **dadurch gekennzeichnet, daß** dem mechanischen Drehzahl-/Drehmomentenwandler (5) und/oder dem Nachschaltsatz (6) Schalteinrichtungen in Form von Kupplungen (K1, K2) und/oder Bremseinrichtungen (B1, B2, B3, B4) zugeordnet sind.

12. Hydrodynamisch-mechanisches Verbundgetriebe nach Anspruch 11, **dadurch gekennzeichnet, daß** das zweite Element (7.1) des ersten Planetenradsatzes (7) des mechanischen Drehzahl/Drehmomentenwandlers (5) mittels einer ersten Bremseinrichtung (B1) feststellbar ist.

13. Hydrodynamisch-mechanisches Verbundgetriebe nach einem der Ansprüche 11 oder 12, **dadurch gekennzeichnet, daß** ein drittes Element (7.3) des ersten Planetenradsatzes (7) des mechanischen Drehzahl-/Drehmomentenwandlers (5) mittels einer zweiten Bremseinrichtung (B2) festsetzbar ist.

14. Hydrodynamisch-mechanisches Verbundgetriebe nach einem der Ansprüche 11 bis 13, **dadurch gekennzeichnet, daß** ein drittes Getriebeelement (8.3) des zweiten Planetenradsatzes (8) des mechanischen Drehzahl-/Drehmomentenwandlers (5) mittels einer dritten Bremseinrichtung (B3) feststellbar ist.

15. Hydrodynamisch-mechanisches Verbundgetriebe nach einem der Ansprüche 8 bis 14, **dadurch gekennzeichnet, daß** die als Bremseinrichtungen und/oder Kupplungseinrichtungen ausgeführten Schaltelemente in Lamellenbauart ausgeführt sind.

16. Hydrodynamisch-mechanisches Verbundgetriebe nach einem der Ansprüche 1 bis 15, **dadurch gekennzeichnet, daß** eine Steuervorrichtung vorgesehen ist.

17. Hydrodynamisch-mechanisches Verbundgetriebe nach einem der Ansprüche 1 bis 16, **gekennzeichnet durch** die folgenden Merkmale:
17.1 es ist eine Steuervorrichtung vorgesehen;
17.2 die Steuervorrichtung ist mit einer Vielzahl von Stellgliedern zur wenigstens mittelbaren Ansteuerung der einzelnen Schaltelemente koppelbar.

18. Hydrodynamisch-mechanisches Verbundgetriebe nach Anspruch 17; **gekennzeichnet durch** die folgenden Merkmale:
18.1 die Steuervorrichtung weist einen Eingang auf, welcher mit einer Einrichtung zur Auswahl eines Schaltplanes, welcher **durch** die Betätigung der einzelnen Schaltelemente in entsprechender Reihenfolge charakterisiert ist, koppelbar ist;
18.2 die Steuervorrichtung umfaßt Mittel zur Bildung einer Stellgröße zur Ansteuerung der Schaltelemente.

19. Hydrodynamisch-mechanisches Verbundgetriebe nach Anspruch 18, **dadurch gekennzeichnet, daß** das Mittel eine programmierte Routine ist.

20. Verfahren zur Entwicklung einer Baureihe aus einem Grundgetriebe in Form eines hydrodynamisch-mechanischen Mehrgangverbundgetriebes gemäß einem der Ansprüche 1 bis 23 mit wenigstens vier theoretisch möglichen Gangstufen für den Einsatz in Fahrzeugen für unterschiedliche Anforderungen, **dadurch gekennzeichnet, daß** für das Grundgetriebe durch Änderung der Reihenfolge der Ansteuerung der einzelnen Schalteinrichtungen oder Weglassen der Ansteuerung in den unteren Gangstufen gegenüber dem Grundansteuervorgang für die theoretisch möglichen Gangstufen ein unterschiedliches Anfahrverhalten des Fahrzeuges realisiert wird.

## Claims

1. Hydrodynamic-mechanical multi-speed compound transmission with at least four speeds;
1.1 with a transmission input shaft (E) and a transmission output shaft (A);
1.2 with a hydrodynamic transmission component (2) and a mechanical transmission component (4);
1.3 the hydrodynamic (2) and the mechanical (4) transmission component are connected in series, viewed in the direction of power flow, means for bypassing the hydrodynamic transmission component (2) during power transmission being provided;
1.4 the hydrodynamic transmission component (2) comprises at least one hydrodynamic speed/torque converter (3);
1.5 the mechanical transmission component (4) comprises a mechanical speed/torque converter (5) with at least two sets of planet wheels (7, 8) with a coupling between a first transmission element (7.2) of the first set of planet wheels (7) and a first transmission element (3.2) of the second set of planet wheels (8), the coupling forming the drive of the mechanical speed/torque converter (5);
**characterised by** the following features:
1.6 the mechanical transmission component (4) also comprises a mechanical resetting assembly (6) comprising at least one set of planet wheels (10) with a sun wheel (10.1), a ring gear (10.3), planet wheels (10.3) and a planet carrier (10.4);
1.7 the output of the mechanical speed/torque converter (5) is connected to the input of the mechanical resetting assembly (6) ;
1.8 the first transmission element (7.2) of the first set of planet wheels (7) and the first transmission element (8.2) of the second set of planet wheels (8) and the input (10.2) of the resetting assembly are formed by the respective web (9) of the sets of planetary wheels (7, 8);
1.9 a braking device (B4) and a coupling device (K2) for coupling the sun wheel (10.1) to the planet carrier (10.4) are associated with the sun wheel (10.1) of the resetting assembly (6);
1.10 the mechanical transmission component (4) is designed in such a way that the transmissions into the theoretically possible and successive, selectable gears cause gear jumps of phi ≤ 1.45 between two theoretically immediately successive gears.

2. Hydrodynamic-mechanical compound transmission according to claim 1, **characterised by** the following features:
2.1 the mechanical transmission component comprises at least six theoretically achievable gears;
2.2 the mechanical transmission component is designed in such a way that the mechanical transmissions into the individual theoretically possible gears cause gear jumps
2.2.1 of phi ≤ 1.45 between the first and the second gear and the second and the third gear and
2.2.2 of phi ≤ 1.35 between two successive gears of the following speeds.

3. Hydrodynamic-mechanical compound transmission according to any of claims 1 or 2, **characterised by** the following features: the mechanical transmission component is designed in such a way that the transmission elements participating in the speed/torque conversion achieve a transmission in the range of 3 < i < 3*.*25 in the first gear and a transmission in the range of 0.7 < i < 0.9 in the last gear.

4. Hydrodynamic-mechanical compound transmission according to any of claims 1 to 3, **characterised in that** the hydrodynamic speed/torque converter (3) comprises two guide wheel devices (L1, L2).

5. Hydrodynamic-mechanical compound transmission according to any of claims 1 to 4, **characterised by** the following feature:
5.1 with means for at least indirect coupling of a further second element of the first set of planet wheels (7) and a further second element of the second set of planet wheels (8) to the transmission input shaft (E).

6. Hydrodynamic-mechanical compound transmission according to claim 5, **characterised in that** the means for at least indirect coupling of the further second element of the first set of planet wheels (7) and of the further second element of the second set of planet wheels (8) to the transmission input shaft (E) comprise a coupling device (K1) for coupling the second transmission element of the first set of planet wheels to the second transmission element of the second set of planet wheels.

7. Hydrodynamic-mechanical compound transmission according to either of claims 5 or 6, **characterised in that** the means for at least indirect coupling of a further second element of the first set of planet wheels (7) and a further second element of the second set of planet, wheels (8) to the transmission input shaft (E) comprise a further coupling device (12) for selective coupling of the second element of the second set of planet wheels to the turbine wheel and/or transmission input shaft.

8. Hydrodynamic-mechanical compound transmission according to any of claims 5 to 7, **characterised in that** the second transmission element of the first set of planet wheels (7) can be non-rotatably connected to the first guide wheel (L1) of the hydrodynamic speed/torque converter (3) via a free-wheel (16).

9. Hydrodynamic-mechanical compound transmission according to any of claims 5 to 7, **characterised in that** the second transmission element of the first set of planet wheels (7) is formed by the sun wheel (7.1) of the first set of planet wheels (7) and the second element of the second set of planet wheels (8) is formed by the sun wheel (8.1) or the second set of planet wheels (8).

10. Hydrodynamic-mechanical compound transmission according to any of claims 4 to 7, **characterised in that** a second guide wheel (L2) of the hydrodynamic speed/torque converter (3) is coupled via a free-wheel (18) to the transmission housing (11).

11. Hydrodynamic-mechanical compound transmission according to any of the claims 1 to 10, **characterised in that** switching devices in the form of couplings (K1, and/or braking devices (B1, B2, B3, B4) are associated with the mechanical speed/torque converter (5) and/or the resetting assembly (6).

12. Hydrodynamic-mechanical compound transmission according to claim 11, **characterised in that** the second element (7.1) of the first set of planet wheels (7) of the mechanical speed/torque converter (5) can be fixed by means of a first braking device B1.

13. Hydrodynamic-mechanical compound transmission according to any of claims 11 or 12, **characterised in that** a third element (7.3) of the first set of planet wheels (7) of the mechanical speed/torque converter (5) can be fixed by means of a second braking device (B2).

14. Hydrodynamic-mechanical compound transmission according to any of claims 11 to 13, **characterised in that** a third transmission element (8.3) of the second set of planet wheels (8) of the mechanical speed/torque converter (5) can be fixed by means of a third braking device (B3).

15. Hydrodynamic-mechanical compound transmission according to any of claims 8 to 14, **characterised in that** the switching elements designed as braking devices and/or coupling devices are of disc-like design.

16. Hydrodynamic-mechanical compound transmission according to any of claims 1 to 15, **characterised in that** a control device is provided.

17. Hydrodynamic-mechanical compound transmission according to any of claims 1 to 16, **characterised by** the following features:
17.1 a control device is provided;
17.2 the control device is coupled to a plurality of final control members for at least indirect control of the individual switching elements.

18. Hydrodynamic-mechanical compound transmission according to claim 17, **characterised by** the following features:
18.1 the control device has an input which can be coupled to a device for selecting a switching plane which is **characterised by** the actuation of the individual switching elements in the appropriate sequence;
18.2 the control device comprises means for forming a correcting variable to control the switching elements.

19. Hydrodynamic-mechanical compound transmission according to claim 18, **characterised in that** the means is a programmed routine.

20. Method for developing a line from a basic transmission in the form of a hydrodynamic-mechanical multi-speed compound transmission according to any of claims 1 to 23 with at least four theoretically possible gears for use in vehicles for different requirements, **characterised in that** start-up behaviour of the vehicle different from the basic control process for the theoretically possible gears is achieved for the basic transmission by changing the sequence of the control of the individual switching devices or omitting the control in the lower gears.

## Revendications

1. Boîte de vitesses compound hydrodynamico-mécanique à plusieurs vitesses avec au moins quatre vitesses ;
1.1 avec un arbre d'entrée (E) et un arbre de sortie (A) ;
1.2 avec une partie transmission hydrodynamique (2) et une partie transmission mécanique (4) ;
1.3 les parties transmission hydrodynamique (2) et mécanique (4), considérées dans le sens du flux de puissance, sont montées en série, des moyens de contournement de la partie transmission hydrodynamique (2) étant prévus dans la transmission de puissance ;
1.4 la partie transmission hydrodynamique (2) comprend au moins un convertisseur hydrodynamique (3) de couple/régime de rotation;
1.5 la partie transmission mécanique (4) comprend un convertisseur mécanique (5) de couple/régime de rotation avec au moins deux trains épicycloïdaux (7,8) avec un couplage entre un premier élément de transmission (7.2) du premier train épicycloïdal (7) et un premier élément de transmission (8.2) du deuxième train épicycloïdal (8), le couplage formant l'organe mené du convertisseur mécanique (5) de couple/régime de rotation ;
**caractérisée par** les dispositions suivantes :
1.6 la partie transmission mécanique (4) inclut en outre un ensemble mécanique (6) disposé à la suite, comprenant au moins un train épicycloïdal (10) avec une roue solaire (10.1), une couronne de train planétaire (10.3), des satellites (10.3) et un porte-pignons satellites (10.4) ;
1.7 la sortie du convertisseur (5) de couple/régime de rotation mécanique est couplée avec l'entrée de l'ensemble mécanique (6) disposé à la suite;
1.8 le premier élément de transmission (7.2) du premier train épicycloïdal (7) et le premier élément de transmission (8.2) du deuxième train épicycloïdal (8) ainsi que l'entrée (10.2) de l'ensemble disposé à la suite sont respectivement formés par le porte-satellites (9) des trains épicycloïdaux (7,8) ;
1.9 un mécanisme de freinage (B4) et un mécanisme d'embrayage (K2) destinés à coupler la roue solaire (10.1) de l'ensemble mécanique (6) disposé à la suite avec le porte-pignons satellites (10.4) sont affectés à ladite roue solaire (10.1) ;
1.10 la partie transmission mécanique (4) est conçue de sorte que les rapports de multiplication dans les vitesses qui peuvent être choisies et qui sont théoriquement possibles et consécutives, provoquent des sauts de phi ≤ 1,45 entre deux vitesses théoriquement directement consécutives.

2. Boîte de vitesses compound hydrodynamico-mécanique selon la revendication 1, **caractérisée par** les dispositions suivantes :
2.1 la partie transmission mécanique comprend au moins six degrés de vitesses théoriquement possibles ;
2.2 la partie transmission mécanique est conçue de sorte que les rapports de multiplication mécaniques dans les vitesses individuelles théoriquement possibles provoquent des sauts
2.2.1 de phi ≤ 1,45 entre première et deuxième vitesses ainsi qu'entre deuxième et troisième vitesses, et
2.2.2 de phi ≤ 1,35 entre deux vitesses consécutives parmi les vitesses suivantes.

3. Boîte de vitesses compound hydrodynamico-mécanique selon l'une des revendications 1 ou 2, **caractérisée par** les dispositions suivantes :
la partie transmission mécanique est conçue de telle sorte que les éléments de transmission qui font partie du convertisseur de couple/régime de rotation réalisent en première vitesse un rapport de multiplication dans la plage de 3 < i < 3,25 et en dernière vitesse un rapport de multiplication dans la plage de 0,7 < i < 0,9.

4. Boîte de vitesses compound hydrodynamico-mécanique selon l'une des revendications 1 à 3, **caractérisée en ce que** le convertisseur couple/régime de rotation hydrodynamique (3) comprend deux mécanismes de roues directrices (L1,L2).

5. Boîte de vitesses compound hydrodynamico-mécanique selon l'une des revendications 1 à 4, **caractérisée par** la disposition suivante :
5.1 avec des moyens pour le couplage au moins indirect d'un deuxième élément supplémentaire du premier train épicycloïdal (7) et d'un deuxième élément supplémentaire du deuxième train épicycloïdal, (8) avec l'arbre d'entrée (E) de la transmission.

6. Boîte de vitesses compound hydrodynamico-mécanique selon la revendication 5, **caractérisée en ce que** les moyens conçus pour coupler au moins indirectement le deuxième élément supplémentaire du premier train épicycloïdal (7) et le deuxième élément supplémentaire du deuxième train épicycloïdal (8) avec l'arbre d'entrée (E) comprennent un mécanisme d'embrayage (K1) destiné au couplage du deuxième élément de transmission du premier train épicycloïdal au deuxième élément de transmission du deuxième train épicycloïdal.

7. Boîte de vitesses compound hydrodynamico-mécanique selon l'une des revendications 5 ou 6, **caractérisée en ce que** les moyens destinés au couplage au moins indirect d'un deuxième élément supplémentaire du premier train épicycloïdal (7) et d'un deuxième élément supplémentaire du deuxième train épicycloïdal (8) avec l'arbre d'entrée (E) comprennent un mécanisme d'embrayage (12) supplémentaire destiné à coupler au choix, le deuxième élément du deuxième train épicycloïdal et/ou l'arbre d'entrée, à la roue de turbine.

8. Boîte de vitesses compound hydrodynamico-mécanique selon l'une des revendications 5 à 7, **caractérisée en ce que** le deuxième élément de transmission du premier train épicycloïdal (7) est apte à être solidarisé en rotation via une roue libre (16), avec la première roue directrice (L1) du convertisseur (3) de couple/régime de rotation hydrodynamique.

9. Boîte de vitesses compound hydrodynamico-mécanique selon l'une des revendications 5 à 7, **caractérisée en ce que** le deuxième élément de transmission du premier train épicycloïdal (7) est formé par la roue solaire (7.1) du premier train épicycloïdal (7) et le deuxième élément de transmission du deuxième train épicycloïdal (8) est formé par la roue solaire (8.1) du deuxième train épicycloïdal (8).

10. Boîte de vitesses compound hydrodynamico-mécanique selon l'une des revendications 4 à 7, **caractérisée en ce qu'**une deuxième roue directrice (L2) du convertisseur (3) de couple/régime de rotation hydrodynamique est couplée avec le carter de boîte de vitesses via une roue libre (18).

11. Boîte de vitesses compound hydrodynamico-mécanique selon l'une des revendications 1 à 10, **caractérisée en ce que** des organes de manoeuvre sous forme d'embrayages (K1, K2) et/ou de mécanismes de freinage (B1, B2, B3, B4) sont affectés au convertisseur (5) de couple/régime de rotation mécanique et/ou à l'ensemble disposé à la suite.

12. Boîte de vitesses compound hydrodynamico-mécanique selon la revendication 11, **caractérisée en ce que** le deuxième élément (7.1) du premier train épicycloïdal (7) du convertisseur de couple/régime de rotation mécanique (5) peut être bloqué au moyen d'un premier mécanisme de freinage.

13. Boîte de vitesses compound hydrodynamico-mécanique selon l'une des revendications 11 ou 12, **caractérisée en ce qu'**un troisième élément (7.3) du premier train épicycloïdal (7) du convertisseur de couple/régime de rotation mécanique (5) peut être immobilisé au moyen d'un deuxième mécanisme de freinage.

14. Boîte de vitesses compound hydrodynamico-mécanique selon l'une des revendications 11 à 13, **caractérisée en ce qu'**un troisième élément de transmission (8.3) du deuxième train épicycloïdal (8) du convertisseur de couple/régime de rotation mécanique (5) peut être bloqué au moyen d'un troisième mécanisme de freinage.

15. Boîte de vitesses compound hydrodynamico-mécanique selon l'une des revendications 8 à 14, **caractérisée en ce que** les organes de manoeuvre conçus comme des mécanismes de freinage et/ou comme des mécanismes d'embrayage sont d'une construction de type à disques multiples.

16. Boîte de vitesses compound hydrodynamico-mécanique selon l'une des revendications 1 à 15, **caractérisée en ce qu'**il est prévu un dispositif de commande.

17. Boîte de vitesses compound hydrodynamico-mécanique selon l'une des revendications 1 à 16, **caractérisée par** les dispositions suivantes :
17.1 il est prévu un dispositif de commande ;
17.2 le dispositif de commande est apte à être couplé avec une pluralité d'organes de réglage destinés à activer au moins indirectement la commande des éléments individuels de manoeuvre.

18. Boîte de vitesses compound hydrodynamico-mécanique selon la revendication 17, **caractérisée par** les dispositions suivantes :
18.1 le dispositif de commande est pourvu d'une entrée apte à être couplée avec un mécanisme de sélection d'un schéma de manoeuvres, lequel est **caractérisé en ce qu'**il active les différents organes de manoeuvre selon un ordre correspondant ;
18.2 le dispositif de commande inclut des moyens de formation d'une grandeur de réglage destinée à actionner la commande des organes de manoeuvre.

19. Boîte de vitesses compound hydrodynamico-mécanique selon la revendication 18, **caractérisée en ce que** le moyen est une routine programmée.

20. Procédé pour le développement d'une gamme de fabrication à partir d'une transmission de base sous la forme d'une boîte de vitesses compound hydrodynamico-mécanique à plusieurs vitesses selon l'une des revendications 1 à 23 avec au moins quatre degrés de vitesses théoriquement possibles, pour utilisation dans des véhicules afin de satisfaire à diverses demandes, **caractérisé en ce qu'**en modifiant l'ordre d'activation de la commande des différents mécanismes de manoeuvre pour la transmission de base ou en supprimant l'activation de la commande dans les vitesses inférieures, on réalise par rapport aux vitesses théoriquement possibles avec la boîte de vitesses de base, un comportement au démarrage du véhicule différent.
